# EUROPEAN PATENT APPLICATION

(11) **EP 4 645 130 A1**
(43) Date of publication of application: **05.11.2025**
(21) Application number: 24806076.6
(22) Date of filing: 16.01.2024
(51) Int. Cl.: G06F 21/32

(54) **DATA MANAGEMENT METHOD AND SYSTEM, ELECTRONIC DEVICE, AND COMPUTER READABLE MEDIUM**

(30) Priority: 17.05.2023 CN 202310560257
(71) Applicant: Huawei Technologies Co., Ltd., Shenzhen, Guangdong 518129 (CN)
(72) Inventor: LV, Wencong, Shenzhen, Guangdong 518129 (CN); JIN, Lanhai, Shenzhen, Guangdong 518129 (CN); GAO, Xutao, Shenzhen, Guangdong 518129 (CN)
(74) Representative: Isarpatent
(86) International application number: PCT/CN2024/072556
(87) International publication number: WO 2024/234712

(57) **Abstract**

This application relates to the field of terminal technologies, and specifically, to a data management method and system, an electronic device, and a computer-readable medium. The method applied to a first electronic device includes: determining an age group of a user; displaying a first control if the age group of the user is a first age group, where the first control is configured to control a permission of a second electronic device to obtain first data, and the second electronic device is configured to manage the first electronic device; allowing or forbidding, in response to an operation of the user on the first control, the second electronic device to obtain the first data; or skipping displaying the first control if the age of the user is a second age group. In this way, the electronic device can adaptively match a data management solution for the user based on the age group of the user, and display a corresponding control permission.

## Description

This application claims priority to Chinese Patent Application No. 202310560257.1, filed with the China National Intellectual Property Administration on May 17, 2023 and entitled "DATA MANAGEMENT METHOD AND SYSTEM, ELECTRONIC DEVICE, AND COMPUTER-READABLE MEDIUM", which is incorporated herein by reference in its entirety.

### TECHNICAL FIELD

The present invention relates to the field of terminal technologies, and specifically, to a data management method and system, an electronic device, and a computer-readable medium.

### BACKGROUND

With development of the field of terminal technologies, an increasing quantity of wearable devices are applicable to different age groups, for example, wearable devices such as a smartwatch. A wearable device such as a smartwatch usually needs to be connected to a mobile terminal such as a mobile phone, and the mobile phone is authorized to manage data on the device such as the watch. For example, when a user who uses the smartwatch is a child, a user who correspondingly uses the mobile phone to manage the data on the smartwatch may be a parent of the child.

However, currently, a data management solution for a wearable device such as a smartwatch is unitary, and the data management solution cannot adapt to adjustment, by users of different age groups, on control permissions of a mobile phone end and a watch end for related data.

### SUMMARY

This application provides a data management method and system, an electronic device, and a computer-readable medium. In this solution, a matched data management solution can be adaptively adjusted based on an age group of a user of a managed device such as a watch, to control an operation permission on the managed device and an operation permission on a management device to which the managed device is correspondingly bound. This helps improve use experience of the user when ensuring data security.

According to a first aspect, this application provides a data management method, applied to a first electronic device. The method includes: determining an age group of a user; displaying a first control if the age group of the user is a first age group, where the first control is configured to control a permission of a second electronic device to obtain first data, and the second electronic device is configured to manage the first electronic device; and allowing or forbidding, in response to an operation of the user on the first control, the second electronic device to obtain the first data; or skipping displaying the first control if the age of the user is a second age group.

For example, the first electronic device may be a watch, and the second electronic device may be a mobile phone. The mobile phone may manage the watch by using an installed smart care application. The watch may match, based on a current age group of the watch user, a data management solution that is suitable for the age group and that is used to manage data and/or an application on the watch. In the data management solution, a part of control permission may be assigned to the watch end, and correspondingly, another part of control permission may be assigned to the mobile phone end.

For example, the first age group is an adult stage that has reached the age of 18. After correspondingly configuring the watch end permission based on a matched data management solution corresponding to the adult stage, the watch may display the first control. In this case, the first electronic device, for example, the watch, may allow the watch user to operate the first control.

The second age group may include a childhood stage under the age of 14 and an adolescent stage that has reached the age of 14 but that is under the age of 18. After correspondingly configuring the watch end permission based on a matched data management solution corresponding to the childhood stage or the adolescent stage, the watch may not display the first control. In this case, the first electronic device, for example, the watch, may not allow the watch user to operate the first control.

In a possible implementation of the first aspect, the determining an age group of a user includes: sending a first query request to a first cloud server, where the first query request is used to obtain an age group tag in information related to a first account used by the user, and the age group tag is determined based on age information that is of the user and that is recorded in the information related to the first account; and determining the age group of the user based on the obtained age group tag.

For example, the first cloud server may be account cloud, and the first account may be a watch account. The account cloud may store information related to the watch account used by the user of the first electronic device. In addition, the account cloud may determine, based on age information, such as a birth date, that is of the watch user and that is recorded in the information related to the watch account, a current age group of the watch user, and add a corresponding age group tag to the information related to the watch user. In this way, the first electronic device, for example, the watch, may query the account cloud for the age group tag of the user, to determine the age group of the user.

In a possible implementation of the first aspect, the first age group includes a third age group and a fourth age group, an age interval corresponding to the third age group and the fourth age group is a continuous interval, an age of the third age group is higher than an age of the fourth age group, and the method includes: displaying a second control if the age group of the user is the third age group, where the second control is configured to control a permission of the first electronic device to acquire and report second data; and allowing or forbidding, in response to an operation of the user on the second control, the first electronic device to acquire and report the second data; or skipping displaying the second control if the age group of the user is the fourth age group.

For example, the third age group is the adolescent stage that has reached the age of 14 but that is under the age of 18. After correspondingly configuring the watch end permission based on a matched data management solution corresponding to the adolescent stage, the watch may display the second control. In this case, the first electronic device, for example, the watch, may allow the watch user to operate the second control. The second control may be, for example, a switch control corresponding to "join an experience improvement plan of the user". This is not limited herein.

The fourth age group is the childhood stage under the age of 14. After correspondingly configuring the watch end permission based on a matched data management solution corresponding to the childhood stage, the watch may not display the second control. In this case, the first electronic device, for example, the watch, may not allow the watch user to operate the second control.

In a possible implementation of the first aspect, the second data includes log data correspondingly generated in a process in which the user uses the first electronic device, and the log data includes any one of a behavior log of the user and an error log of the first electronic device.

In a possible implementation of the first aspect, an age interval corresponding to the first age group and the second age group is a continuous interval, and an age of the first age group is higher than an age of the second age group; and
the age group tag includes: a first tag corresponding to the first age group, a second tag corresponding to the third age group, and a third tag corresponding to the fourth age group.

For example, the first tag may be an adult stage tag, the second tag may be an adolescent stage tag, and the third tag may be a childhood stage tag.

In a possible implementation of the first aspect, the first control is a switch control, and the allowing or forbidding, in response to an operation of the user on the first control, the second electronic device to obtain the first data includes: allowing, in response to a first operation of setting a state of the first control to an enabled state by the user, the second electronic device to obtain the first data; or forbidding, in response to a second operation of setting the state of the first control to a disabled state by the user, the second electronic device to obtain the first data.

In a possible implementation of the first aspect, the allowing or forbidding, in response to an operation of the user on the second control, the first electronic device to acquire and report the second data includes: allowing, in response to a third operation of setting a state of the second control to an enabled state by the user, the first electronic device to acquire and report the second data; or forbidding, in response to a fourth operation of setting the state of the second control to a disabled state by the user, the first electronic device to acquire and report the second data.

In a possible implementation of the first aspect, the first control includes any one of the following: a corresponding control configured to synchronize position information of the first electronic device to a second cloud server; a corresponding control configured to synchronize, to the second cloud server, sports information recorded by the first electronic device; a corresponding control configured to synchronize, to the second cloud server, a contact list stored in the first electronic device; a corresponding control configured to synchronize album data of the first electronic device to the second cloud server; a corresponding control configured to synchronize, to the second cloud server, an unknown SMS message received by the first electronic device; and a control configured to control whether the first electronic device is allowed for automatic answering of a call request.

The second cloud server may be, for example, child cloud. The watch and the mobile phone may separately establish a communication connection to the child cloud.

In a possible implementation of the first aspect, the first data includes any one of the following data acquired or stored by the first electronic device: the position information, a sports record, the contact list, the album data, and the unknown SMS message.

According to a second aspect, this application provides a data management method, applied to a second electronic device, where the second electronic device is configured to manage a first electronic device, and the method includes: The second electronic device skips displaying a first control when confirming that the first electronic device displays the first control, where the first control is configured to control a permission of the second electronic device to obtain first data; or the second electronic device displays the first control when confirming that the first electronic device does not display the first control; and the second electronic device obtains the first data of the first electronic device in response to an operation of setting a state of the first control to an enabled state by a second user.

To be specific, based on a corresponding data management solution, the first electronic device and the second electronic device may mutually exclusively display control permissions of the first electronic device and the second electronic device.

In a possible implementation of the second aspect, the method further includes: The second electronic device skips displaying a second control when confirming that the first electronic device displays the second control, where the second control is configured to control a permission of the first electronic device to acquire and report second data; or the second electronic device displays the second control when confirming that the first electronic device does not display the second control.

According to a third aspect, this application provides a data management system, including a first electronic device, a second electronic device, a first cloud server, and a second cloud server, where the first electronic device and the second electronic device separately establish a first communication connection to the first cloud server; the first electronic device and the second electronic device separately establish a second communication connection to the second cloud server; and the first electronic device is configured to perform, based on the first communication connection and the second communication connection, the data management method according to the first aspect and the possible implementations of the first aspect; and the second electronic device is configured to perform, based on the first communication connection and the second communication connection, the data management method according to the second aspect and the possible implementations of the first aspect.

According to a fourth aspect, this application provides an electronic device, including one or more processors and one or more memories, where the one or more memories store one or more programs, and when the one or more programs are executed by the one or more processors, the electronic device is enabled to perform the data management method according to the first aspect, the second aspect, and the possible implementations.

According to a fifth aspect, this application provides a computer-readable medium, where the readable medium stores instructions, and when the instructions are executed on a computer, the computer is enabled to perform the data management method according to the first aspect, the second aspect, and the possible implementations.

### BRIEF DESCRIPTION OF DRAWINGS

FIG. 1 is a diagram of an application scenario of a data management method according to an embodiment of this application;
FIG. 2 is a diagram of an implementation principle of a data management method according to an embodiment of this application;
FIG. 3A and FIG. 3B are a schematic flowchart of an interaction implementation of a data management method according to an embodiment of this application;
FIG. 4A and FIG. 4B are a diagram of a change of a related interface for acquiring age information of a watch user in a process of creating a new watch account according to an embodiment of this application;
FIG. 5 is a diagram of an interface for completing information about a watch user according to an embodiment of this application;
FIG. 6A is a diagram of a privacy center interface that is displayed by a watch and that corresponds to a data management solution A after a watch end permission is set according to an embodiment of this application;
FIG. 6B is a diagram of a privacy center interface that is displayed by a watch and that corresponds to a data management solution B after a watch end permission is set according to an embodiment of this application;
FIG. 6C is a diagram of an interface that is displayed by a watch and that corresponds to a data management solution C after a watch end permission is set according to an embodiment of this application;
FIG. 7A-1 and FIG. 7A-2 are a diagram of a privacy center interface that is displayed by a watch and that corresponds to a data management solution A after a mobile phone end permission is set according to an embodiment of this application;

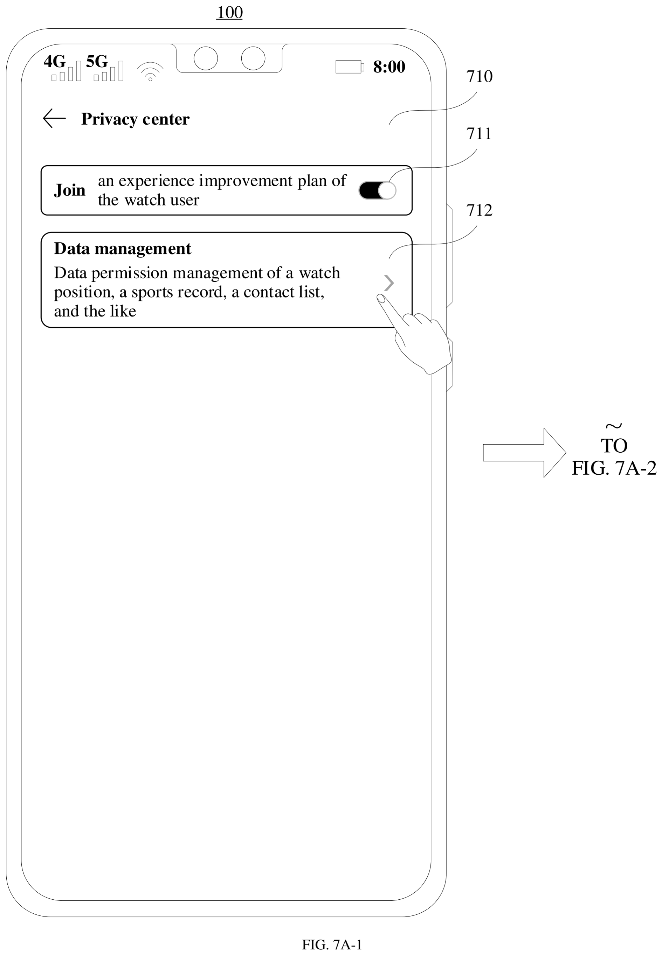

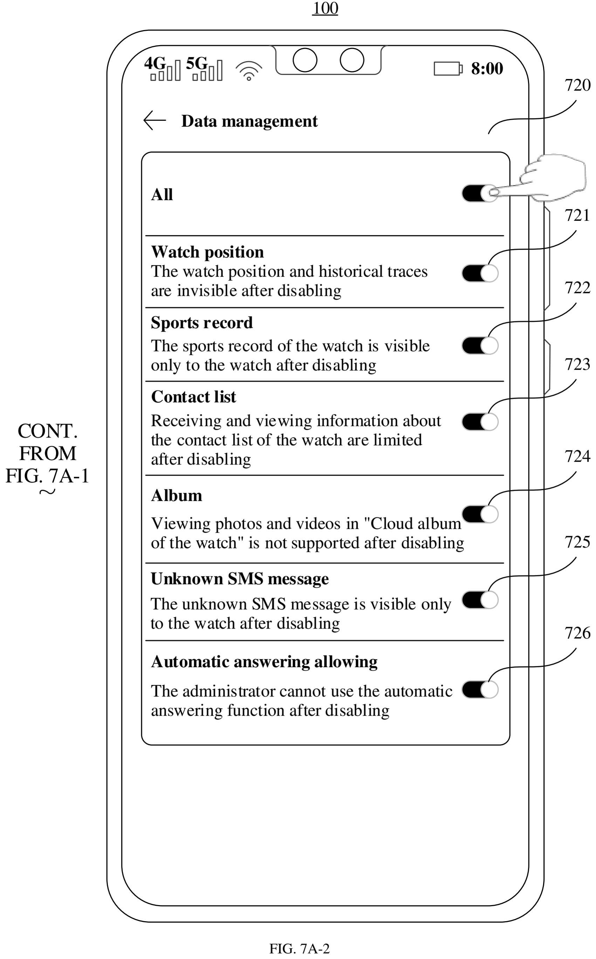

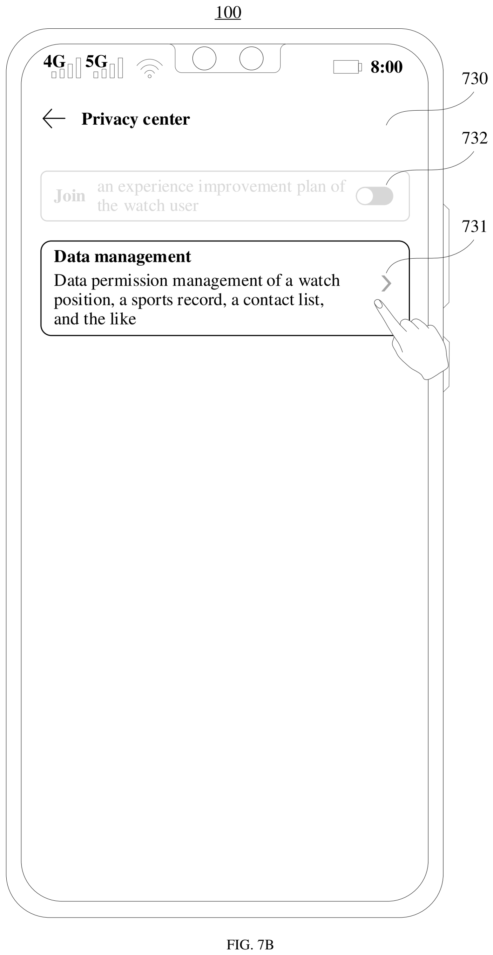

FIG. 7B is a diagram of a privacy center interface that is displayed by a watch and that corresponds to a data management solution B after a mobile phone end permission is set according to an embodiment of this application;

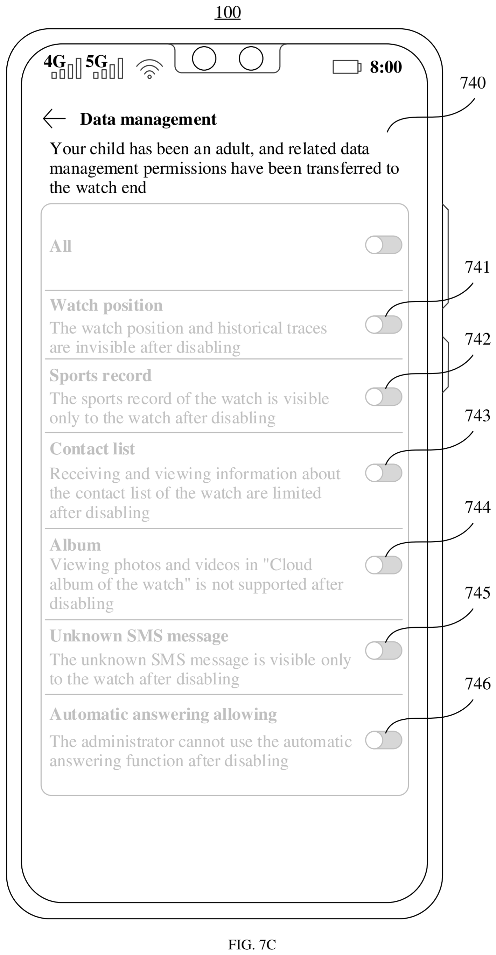

FIG. 7C is a diagram of a privacy center interface that is displayed by a watch and that corresponds to a data management solution C after a mobile phone end permission is set according to an embodiment of this application;

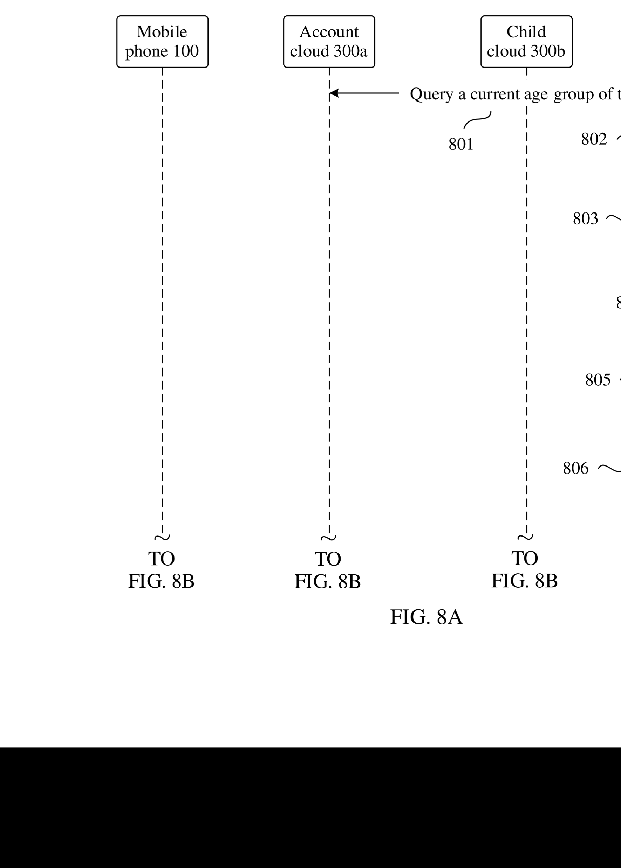

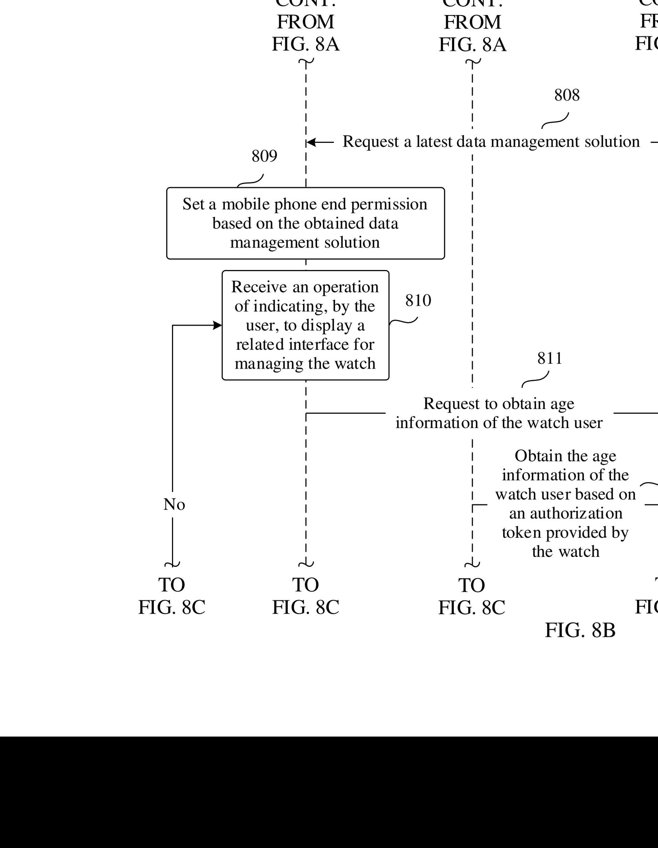

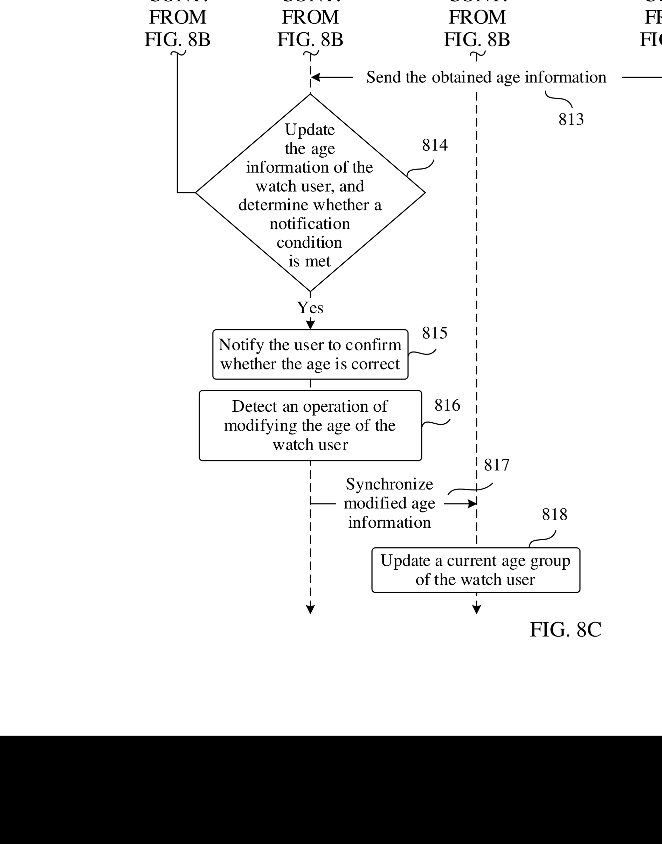

FIG. 8A, FIG. 8B, and FIG. 8C are a schematic flowchart of an interaction implementation of another data management method according to an embodiment of this application;

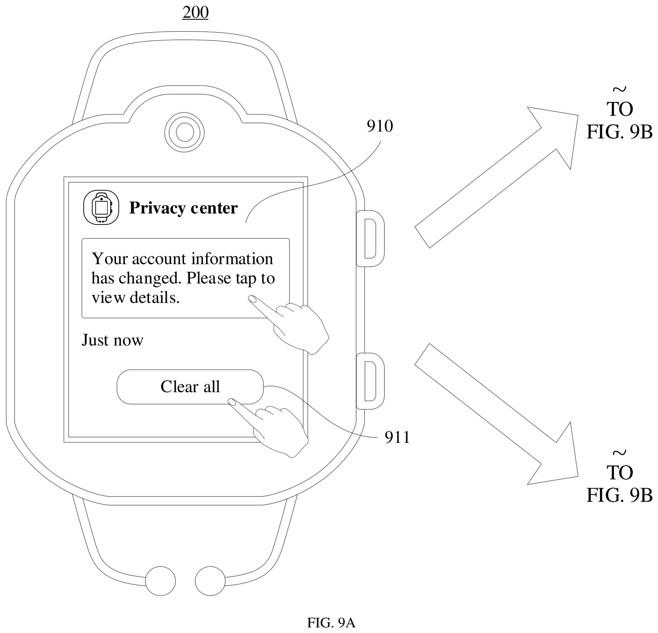

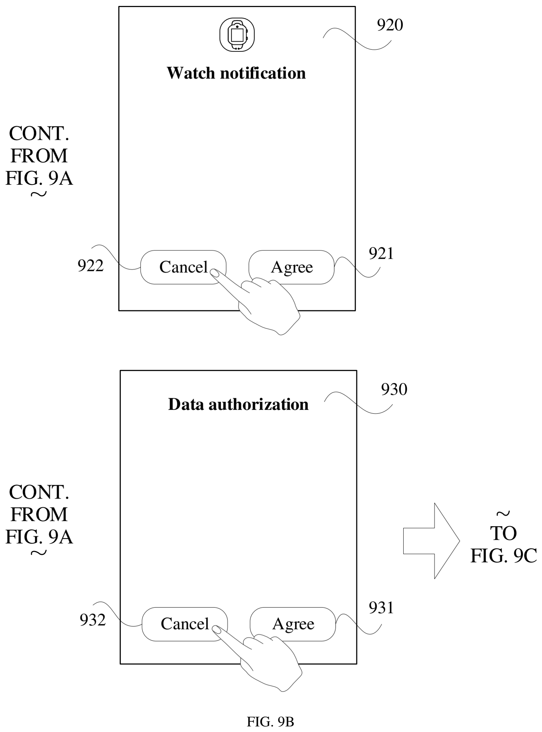

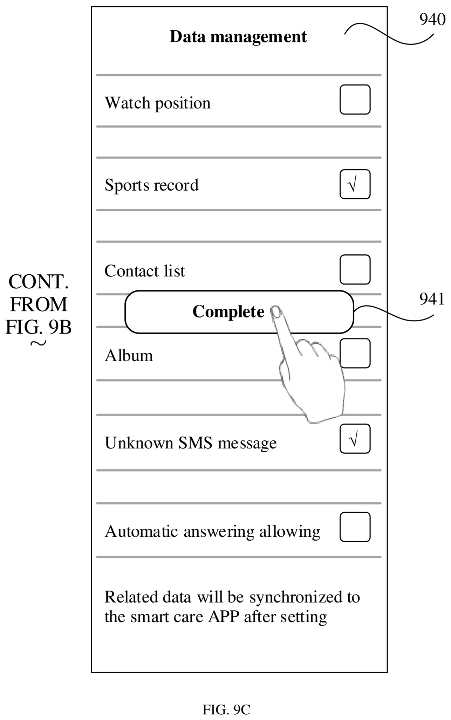

FIG. 9A, FIG. 9B, and FIG. 9C are a diagram of a change of a growth notification interface correspondingly displayed by a watch when it is detected that a watch user enters an adolescent stage or an adult stage according to an embodiment of this application;
FIG. 10A-1 and FIG. 10A-2 are a diagram of a change of a related interface for displaying a privacy change notification by a mobile phone according to an embodiment of this application;

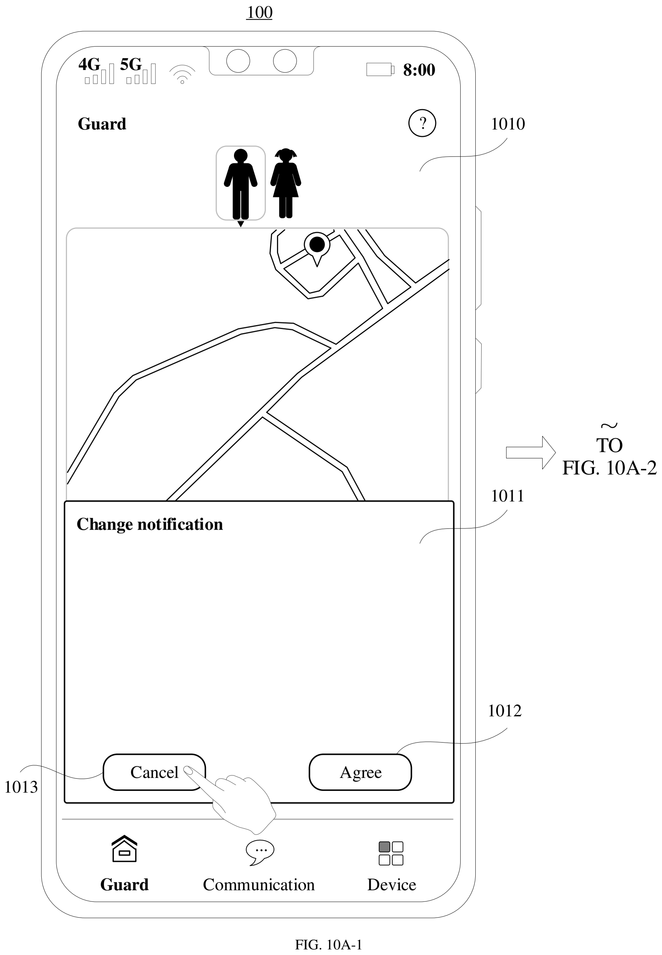

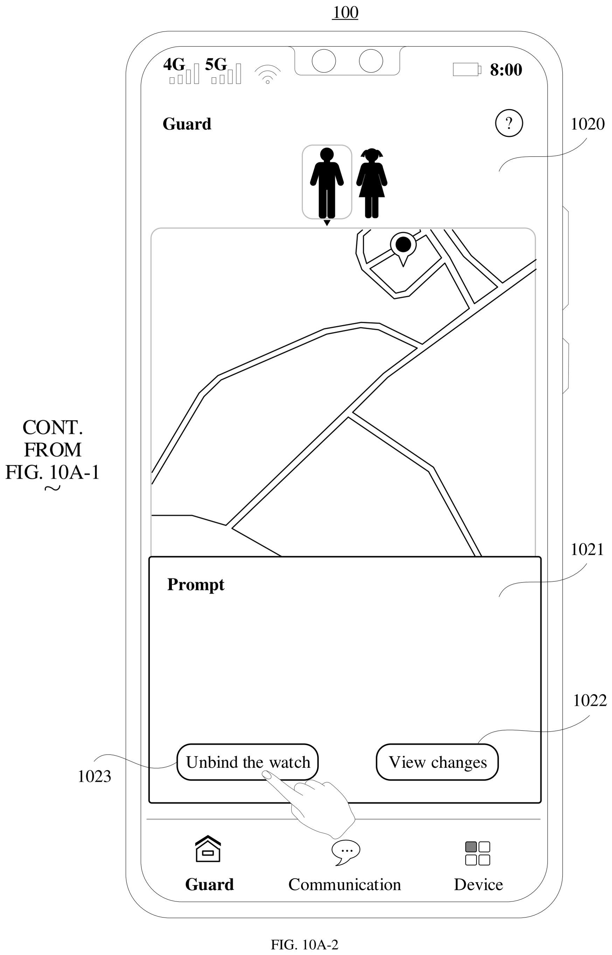

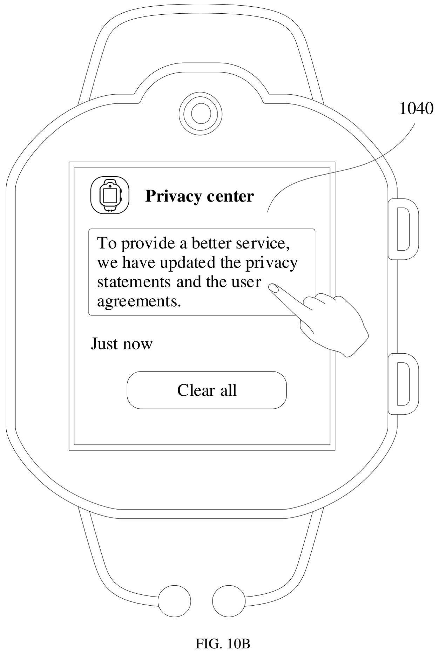

FIG. 10B is a diagram of a change of a related interface for displaying a privacy change notification by a watch according to an embodiment of this application;

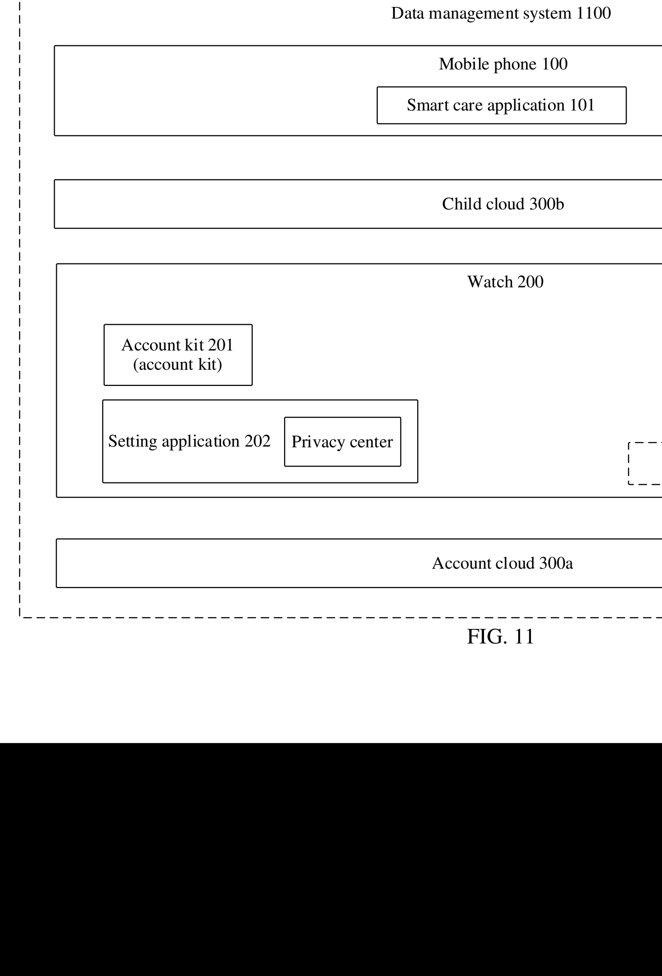

FIG. 11 is a diagram of an architecture of a data management system for implementing the foregoing data management method according to an embodiment of this application;

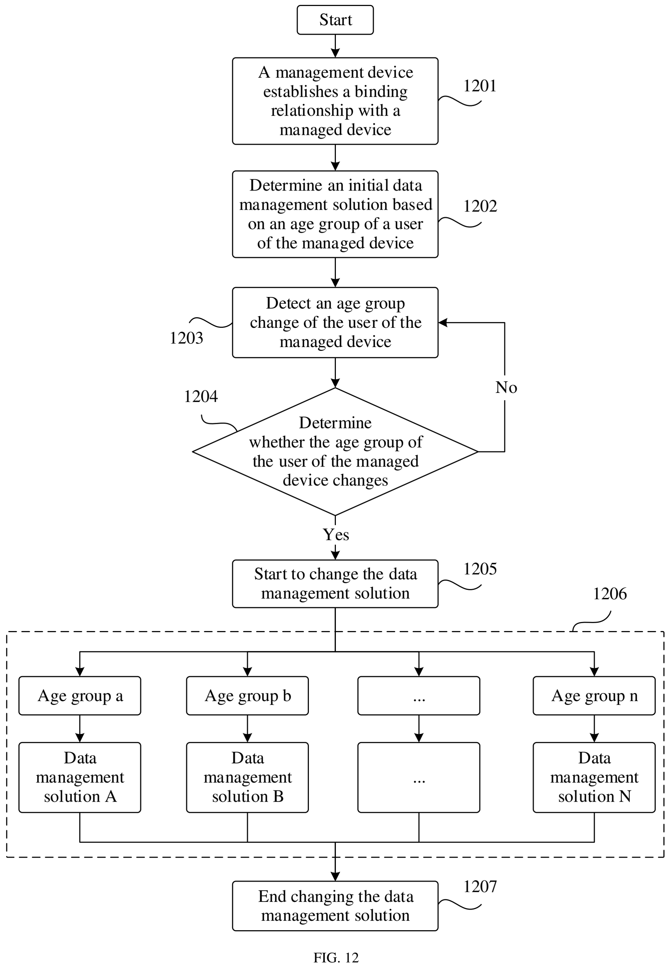

FIG. 12 is a diagram of an implementation procedure of a data management method according to an embodiment of this application;

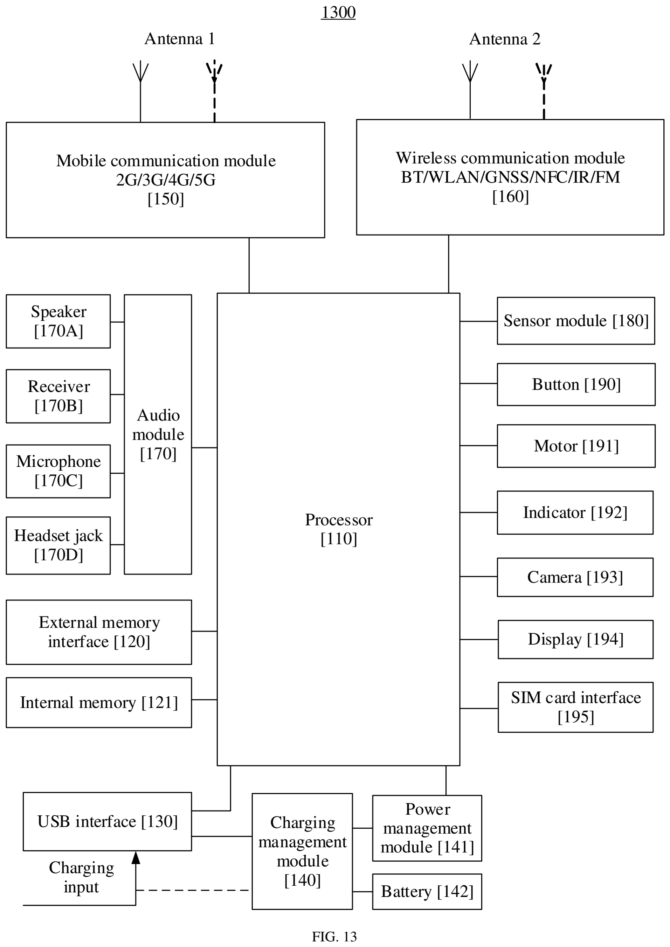

FIG. 13 is a diagram of a structure of an electronic device according to an embodiment of this application; and

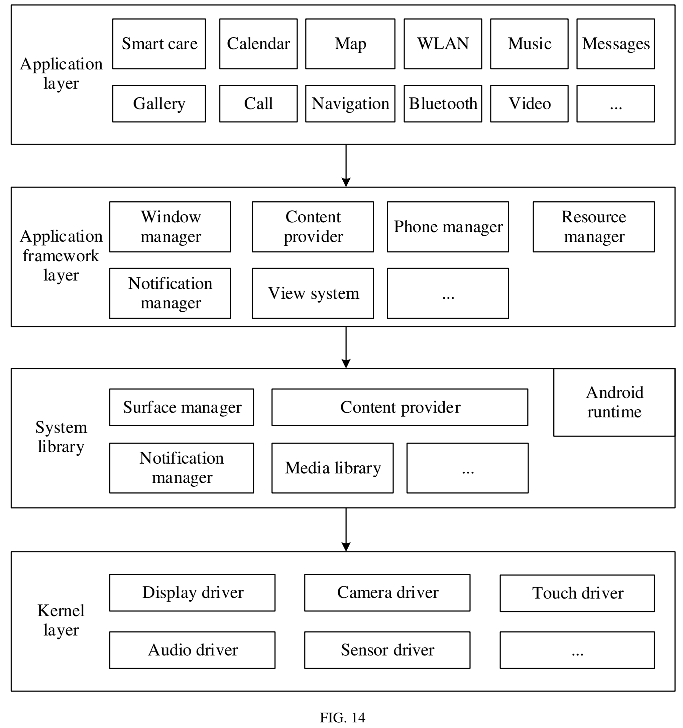

FIG. 14 is a block diagram of a structure of a software system of a mobile phone 100 according to an embodiment of this application.

### DESCRIPTION OF EMBODIMENTS

To make objectives, technical solutions, and advantages of embodiments of this application clearer, the following describes the technical solutions in embodiments of this application in detail with reference to accompanying drawings and specific implementations of this specification.

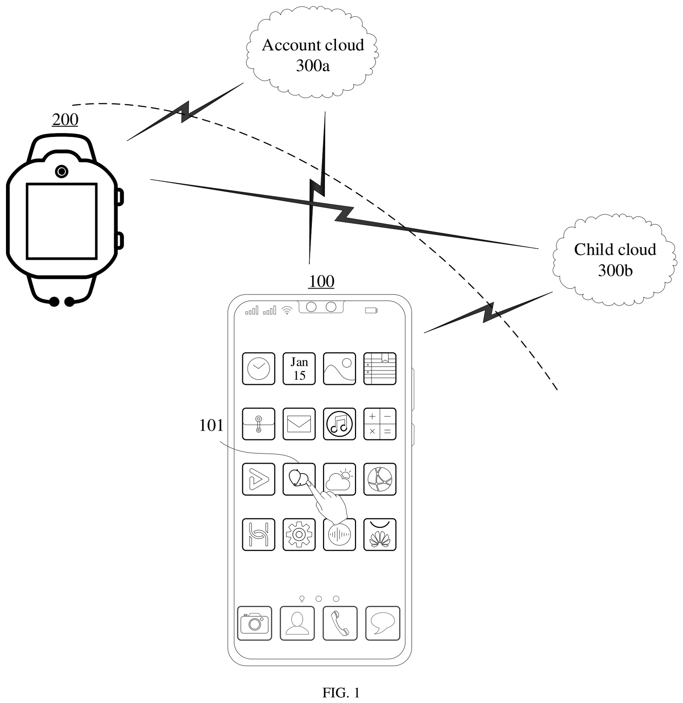

FIG. 1 is a diagram of an application scenario of a data management method according to an embodiment of this application.

As shown in FIG. 1, the scenario includes a mobile phone 100 and a watch 200. The watch 200 may be a child smartwatch. Correspondingly, an APP configured to manage the watch 200, for example, a smart care application 101, may be installed on the mobile phone 100.

When the watch 200 is used for the first time, the watch 200 may be bound by logging in to a mobile phone account by using the mobile phone 100, and a watch account needs to be created/logged in for the watch 200, so as to use all functions of the watch 200. The full functions mean all functions supported by the watch 200. A mobile phone user who logs in to the mobile phone account on the mobile phone 100 and uses the smart care application 101 may be a parent user, and a watch user who logs in to the watch account on the watch 200 and uses the full functions of the watch may be a child user. Mobile phone account information and watch account information may be synchronously uploaded to account cloud 300a. In addition, the mobile phone 100 and the watch 200 may further separately establish a communication connection to child cloud 300b that manages child-related data. For example, the smart care application 101 running on the mobile phone 100 may access the child cloud 300b by using Wi-Fi or a cellular data network supported by a SIM card of the mobile phone; and the watch 200 may access the child cloud 300b by using Wi-Fi or a cellular data network supported by a SIM card of the watch. In this way, the mobile phone 100 can view, share, or perform an operation to enable or disable data or a related data switch on the watch 200 based on authorization, or the like.

When the user of the watch 200 grows to a next age group, for example, after the user grows from a current childhood stage to an adolescent stage, the user may hope to manage some personal data on the watch 200, or perform an operation to enable or disable a switch of a corresponding function on the watch 200, or the like. In this case, a control permission of the mobile phone 100 on the data on the watch 200 and a control permission of the watch 200 on the data of the watch 200 need to be adaptively adjusted.

As described above, a current data management solution used to manage the data on the watch 200 cannot meet data management requirements of users of different age groups.

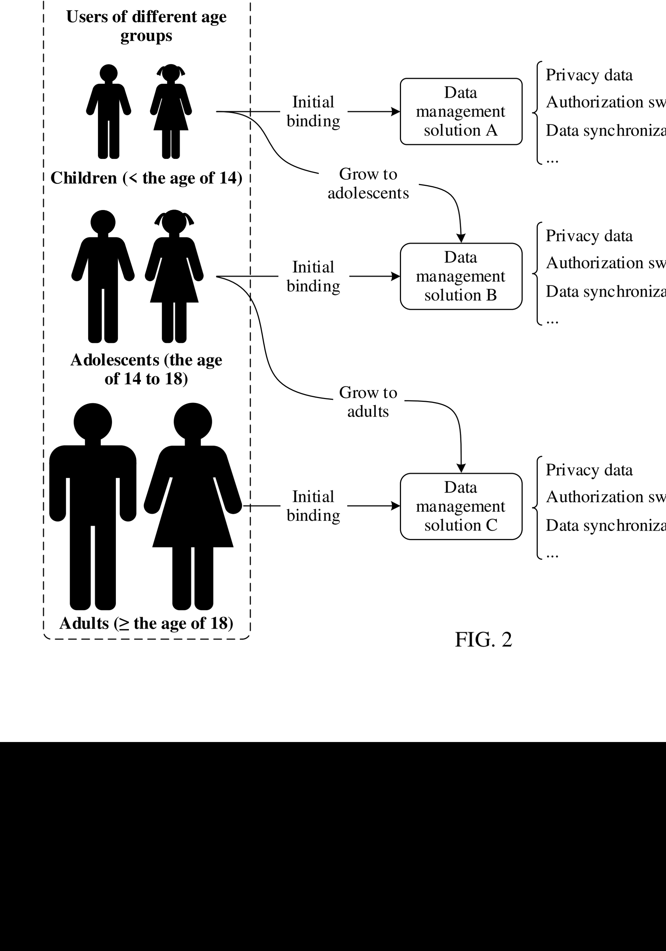

To resolve the foregoing problem, this application provides a data management method. Specifically, in the method, data management solutions that match users of different age groups are preset based on management capabilities and management requirements of users of different age groups for data on a wearable device such as a watch used by the users. For example, with reference to FIG. 2, a data management solution A may be used for a user under the age of 14. In the solution A, a mobile phone end permission may be preset to include a switch control permission for privacy data on the watch and for acquiring and reporting, by the authorized watch, a behavior log and an error log in a process in which the user uses the watch, a control permission for aspects such as whether to enable some data synchronization switches, and the like, and a watch end permission is preset to not include a control permission for the foregoing content. A data management solution B may be used for a user who has reached the age of 14 but has not reached the age of 18. In the solution B, the mobile phone end permission may be preset to include a control permission for some data synchronization switches on the watch, and the like, and the watch end permission is preset to include a switch control permission for privacy data on the watch and for acquiring and reporting, by the authorized watch, a behavior log and an error log in a process in which the user uses the watch, and the like. A data management solution C may be used for a user who has reached the age of 18. In the solution C, the watch end permission may be preset to include a switch control permission for the foregoing privacy data and for acquiring and reporting, by the authorized watch, a behavior log and an error log in a process in which the user uses the watch, a control permission for whether to enable some data synchronization switches, and the like, and the mobile phone end permission is preset to not include various control permissions for the foregoing content.

A switch for acquiring the behavior log and the error log in the process in which the user uses the watch may be briefly referred to as an "authorization switch" shown in FIG. 2. The switch may be, for example, a switch corresponding to "join a user experience improvement plan". The foregoing behavior log may record, for example, related data such as a frequency and duration of using some functions of the watch by the user, and the error log may record, for example, related data such as a time when a function fault occurs in a running process of the watch and a fault type. This is not limited herein.

In this way, when a wearable device such as a watch is used for the first time, age information of the user may be obtained, and a data management solution of a corresponding age group is matched for the user, so as to meet data management requirements of users of different age groups for the wearable device such as the watch. In addition, in a process in which the watch is used by a same user for a long time, the watch may monitor a change of an age group of the user in a manner such as polling account cloud. When detecting that the user grows to a next age group, the watch may actively match a data management solution corresponding to the next age group for the user, so as to meet a corresponding changed data management requirement of the user when the user grows to a different age group.

It may be understood that, in some other embodiments, the foregoing age used to identify the childhood stage, the adolescent stage, or the adult stage may be, for example, the age of 14 or the age of 18, or may be another preset age. This is not limited herein.

It may be understood that, in view of that the watch is connected to the mobile phone and authorizes the mobile phone to manage a management relationship of related data on the watch, the mobile phone end permission shown in FIG. 2 may also be referred to as a management end permission, and the management end permission may also be a control permission of an application (application, APP) such as the smart care application installed on the mobile phone. Correspondingly, the watch end permission shown in FIG. 2 may also be referred to as a managed end permission. The managed end permission may correspond to a permission of the user of the watch of directly performing an operation on the watch to manage related data, for example, operating access, authorizing another administrator to view privacy data on the watch, authorizing to acquire watch data of the behavior log and the error log in the process in which the user uses the watch, and managing states of some data synchronization switches on the watch. This is not limited herein.

In some other embodiments, the data management solution provided in this application may alternatively include more or fewer data management solutions corresponding to different age groups than those shown in FIG. 2, and in each data management solution, an authorization permission for managing corresponding data by the mobile phone end or the watch end may alternatively be assigned in another proper manner. This is not limited herein.

It may be understood that the privacy data on the wearable device such as the watch may include but is not limited to position data, sports data, contact list data, album data, SMS message data, and the like that are acquired or recorded by the watch. The foregoing data synchronization switch may be a corresponding switch for obtaining or viewing the privacy data, for example, a watch position switch, a sports record switch, a contact list switch, an album switch, or an unknown SMS message switch. The switch control permission for acquiring and reporting, by the authorized watch, the behavior log and the error log in the process in which the user uses the watch may be a switch control permission corresponding to a watch user experience improvement plan for the watch, a user experience improvement plan for another wearable device, and the like. This is not limited herein.

It may be understood that a wearable device to which the data management solution provided in this application is applicable may include but is not limited to a smartwatch, a smart band, smart glasses, a wired headset, a wireless headset (for example, a TWS Bluetooth headset, a neck-mounted Bluetooth headset, or a head-mounted Bluetooth headset), a smart anklet, a smart ring, a smart necklace, an augmented reality (augmented reality, AR) device, a virtual reality (virtual reality, VR) device, and the like. A specific form of the wearable device is not limited in this application.

A mobile terminal that is configured to manage data on the wearable device such as the watch and to which the data management solution provided in this application is applicable may include but is not limited to a mobile phone, a tablet computer, a desktop computer, a laptop computer, a handheld computer, a netbook, and another electronic device that is embedded with or coupled to one or more processors and that can access a network, such as a smart television, a server, or vehicle machine equipment.

For example, the following continues to use the watch 200 as a managed device and the mobile phone 100 as a management device. A specific implementation process of the data management solution provided in this application is specifically described.

It may be understood that, in the application scenario shown in FIG. 1, the watch 200 in this embodiment of this application may be a child watch customized for growth of a child. In some other application scenarios, the watch 200 in this embodiment of this application may alternatively be a smartwatch or the like that can support watch case replacement to adapt to use by users of different age groups. This is not limited herein.

It should be further declared that, in embodiments of this application, the steps in the method and the procedure are numbered for ease of reference, instead of limiting a sequence. If there is a sequence between the steps, the text description shall prevail.

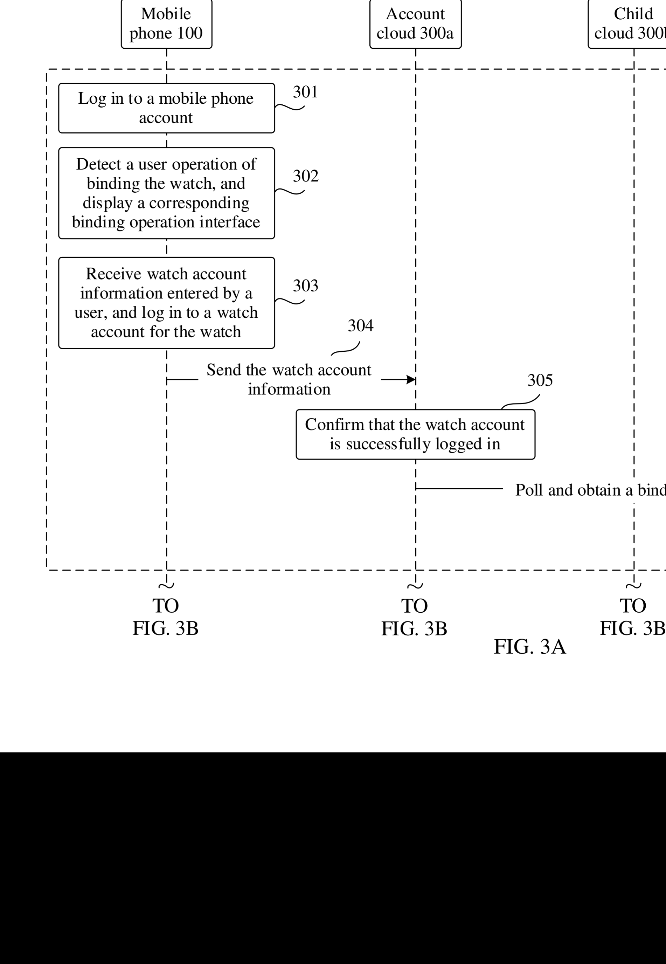

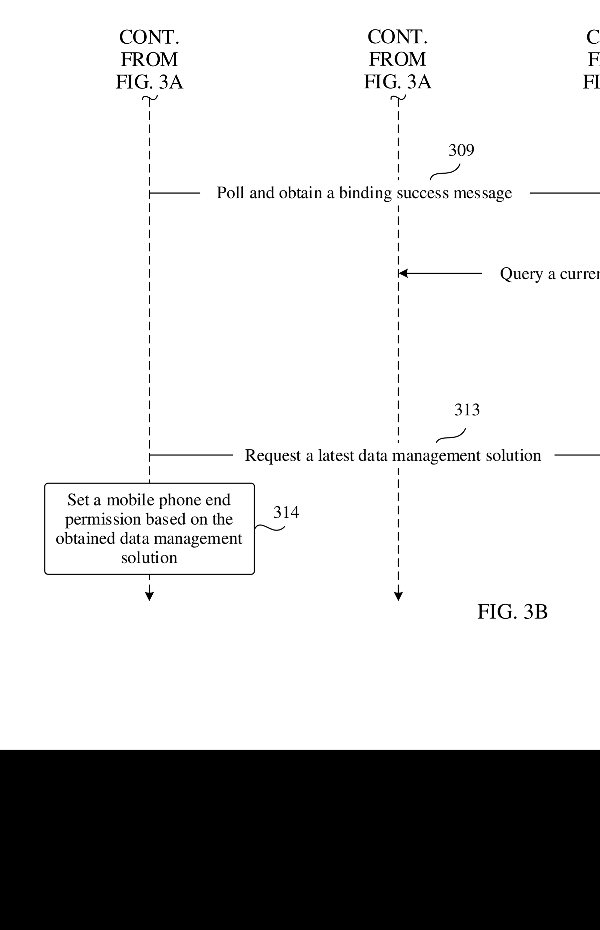

Based on the application scenario shown in FIG. 1, FIG. 3A and FIG. 3B are a diagram of an interaction procedure for implementing a data management method according to an embodiment of this application.

As shown in FIG. 3A and FIG. 3B, the interaction procedure mainly describes a specific implementation process of matching, when the watch 200 is used for the first time, a data management solution adapted to an age group for a watch user. The interaction procedure mainly relates to interaction between the mobile phone 100, the watch 200, the account cloud 300a, and the child cloud 300b. In some other embodiments, for distinguishing description, the account cloud 300a may also be described as a first cloud server, and the child cloud 300b may also be described as a second cloud server.

Specifically, the interaction procedure shown in FIG. 3A and FIG. 3B may include the following steps.

301: The mobile phone 100 logs in to a mobile phone account.

For example, in response to a user operation, the mobile phone 100 may run an application that can manage the watch, for example, a smart care application. Further, the user may perform an operation on a corresponding login interface of the smart care application to log in to the mobile phone account, so that the mobile phone 100 establishes a communication connection to the account cloud 300a. It may be understood that, when the mobile phone 100 runs the smart care application for the first time, the user may be reminded to log in to the mobile phone account. For a corresponding reminding interface, refer to an existing mobile phone account login interface. Details are not described herein in this application.

302: The mobile phone 100 detects a user operation of binding the watch, and displays a corresponding binding operation interface.

For example, the user may perform an operation on a related interface that is of the smart care application and that is displayed by the mobile phone 100, to bind the watch. After detecting the user operation of indicating to bind the watch, the mobile phone 100 may display a related interface for verifying information about the to-be-bound watch, for example, display a code scanning page. The scanning page may be used to scan a device identification code displayed on the to-be-bound watch 200. The device identification code may be a two-dimensional code, a bar code, or the like that includes device identification information. This is not limited herein.

For example, the user may tap an icon of the smart care application on a desktop of the mobile phone 100 to run the smart care application. Further, the user may perform an operation on the corresponding interface that is of the smart care application and that is displayed by the mobile phone 100, to bind the watch 200. For example, the user may perform an operation on the corresponding interface of the smart care application to open the code scanning page, and hold the mobile phone 100 to scan, in an aligned manner, the device identification code displayed on the watch 200, to obtain device identification information of the watch 200. Based on the device identification information, the mobile phone 100 may be bound, by using an account cloud request, to the watch 200 indicated by the device identification information. For a specific binding process, refer to the following steps 304 to 309. Details are not described herein.

It may be understood that, an application that can manage the watch, such as the smart care application, running on the mobile phone 100 may provide a plurality of binding manners for the user to operate. This is not limited herein.

303: The mobile phone 100 receives watch account information entered by the user, and logs in to a watch account for the watch.

For example, the user may perform an operation on a related interface that is displayed by the mobile phone 100 and that prompts to log in to the watch account, to enter the watch account information. Correspondingly, when receiving the watch account information entered by the user, the mobile phone 100 may log in to the watch account for the to-be-connected watch 200. The watch account is different from the mobile phone account logged in by the mobile phone 100 in step 301. The watch account may be a device account logged in on the watch 200, and the mobile phone account may be another device account logged in on the mobile phone 100, or an account used for logging in to the smart care application. The watch account information may include an account name set for the watch user, a mobile phone number specified for verification when a new account is created, a correspondingly set login password, age information of the watch user, and the like. This is not limited herein.

It may be understood that, when the mobile phone 100 is bound to the watch 200 for the first time, or when the watch 200 is used for the first time, a mobile phone account correspondingly logged in by the smart care application on the mobile phone 100 may create/log in to a watch account for the to-be-bound watch 200. The watch account may be an account registered based on a number of a SIM card installed on the watch 200, or may be an account registered by using a mailbox. This is not limited herein. A watch account registered by using the SIM card is used as an example. If the SIM card installed on the watch 200 is not registered for a watch account, the mobile phone account may create a new watch account for the watch 200. If the SIM card installed on the watch 200 has been registered for the watch account, the mobile phone account may log in to the registered watch account for the watch 200.

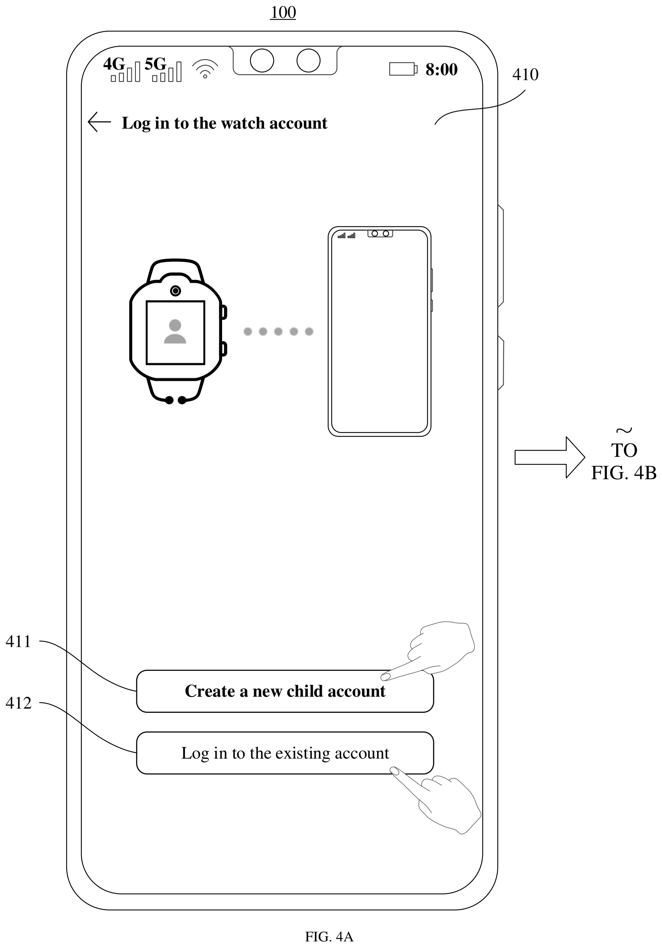

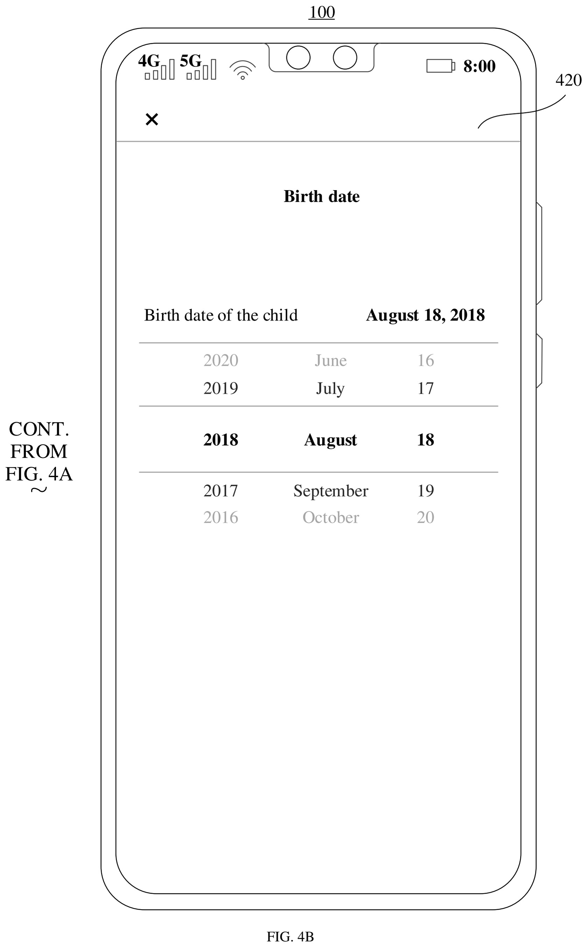

With reference to FIG. 4A and FIG. 4B, the user may choose to create a new watch account 411 on a watch account login interface 410 displayed by the mobile phone 100. In the creation process, the mobile phone 100 may display an age information acquisition interface 420, to acquire age information entered by the user, for example, a birth date "August 18, 2018" shown in FIG. 4A and FIG. 4B. Further, the age information may be correspondingly recorded in related information of the newly created watch account, and is used as a basis for subsequently determining the age of the user.

It may be understood that, in some embodiments, when a new watch account is created, if the age information entered by the user indicates that the watch user has reached the age of 14 and is no longer in the childhood stage, a corresponding prompt interface may also be displayed to notify the user that another account may be created.

It may be understood that, if the watch user is under the age of 14 and is in the childhood stage, the newly created watch account may be further displayed as a child account. The account cloud 300a may correspondingly manage related information of the child account to the mobile phone account correspondingly logged in by the mobile phone 100, for example, store the related information of the child account to related information of the watch account in an association manner. In this case, the mobile phone account may be a parent account. If the user has reached the age of 14 and is no longer in the childhood stage, another account that the user chooses to continue to create may also be used to log in to the watch 200. However, when the account is synchronized to the account cloud 300a for storage, the account cloud 300a may independently store related information of the account, and no longer store the related information of the account in association with the related information of the mobile phone account. In addition, after the another account created in the foregoing process logs in to the watch 200, the watch 200 may continue to establish a binding relationship with the mobile phone 100. In this case, the watch 200 may still match the data management solution B or the data management solution C for the watch user based on the age information of the user who has reached the age of 14.

Still with reference to FIG. 4A and FIG. 4B, the user may alternatively choose to log in to an existing account 412 on the watch account login interface 410 displayed by the mobile phone 100, to log in to the registered watch account for the watch 200. Further, in subsequent steps, the related information of the existing account that is logged in may provide the recorded age information of the watch user. Details are not described herein.

304: The mobile phone 100 sends the watch account information to the account cloud 300a.

For example, after receiving the watch account information entered by the user, the mobile phone 100 may send the corresponding information to the account cloud 300a for account information verification.

305: The account cloud 300a confirms that the watch account is successfully logged in.

For example, the account cloud 300a may verify whether the received watch account information matches the information about the registered watch account, so as to confirm whether the watch account is successfully logged in. It may be understood that, in a process of creating a new watch account, the account cloud 300a may create a new account for the newly created watch account, to record information such as an account name, a mobile phone number, and a password that are correspondingly entered in the newly created watch account. The account cloud 300a may determine, when receiving the information about the newly created watch account, a current age group of the watch user based on age information entered by the user, for example, a birth date. In some other embodiments, after operating the mobile phone 100 to create a new watch account, the user may also perform an operation to complete personal information of the watch user. In this case, the account cloud 300a may determine a current age group of the watch user based on age information, for example, a birthday, that is set when the user completes the information. After determining the corresponding age group, the account cloud 300a may add an age group tag (tag) to the corresponding watch account information, to indicate an age group of the corresponding watch user. A rule for determining the age group of the user by the account cloud 300a based on the age information of the user may be preset on the account cloud 300a. In a process in which the watch user grows, the account cloud 300a may update and maintain the current age group of the user in real time, for the watch 200 to query.

For example, with reference to FIG. 2, if the age of the watch user is 12, it may be determined that the age group of the watch user is a childhood stage (< the age of 14). If the age of the watch user is 15, it may be determined that the age group of the watch user is an adolescent stage (the age of 14 to 18). If the age of the watch user is 19, it may be determined that the age group of the watch user is an adult stage (≥ the age of 18). This is not limited herein.

It may be understood that, in the process in which the watch user grows, the account cloud 300a may continuously maintain the age group of the watch user. When the age group of the watch user changes, the watch 200 may detect a corresponding age group change when querying the account cloud 300a for the age group of the watch user.

306: The watch 200 polls the account cloud 300a and obtains a binding request.

For example, the watch 200 may start polling an account cloud server when displaying the device identification code, to confirm with the account cloud 300a whether the mobile phone performs code scanning to request to be bound to the watch. If the mobile phone performs code scanning to request to be bound to the watch, the watch 200 may obtain the corresponding binding request. Further, the watch 200 may poll the account cloud 300a to determine whether the watch 200 is successfully bound to the mobile phone 100 in a process in which the mobile phone 100 logs in to the watch account. When the account cloud 300a feeds back a binding success message, the watch 200 may end polling.

The foregoing polling processes may be triggered based on a timing condition, where the timing condition may be preset to perform polling once every 200 ms, or may be triggered based on a corresponding broadcast message received from the account cloud 300a. This is not limited herein. It may be understood that, if the account cloud 300a never feeds back a binding success message, the watch 200 may gradually prolong duration of a polling interval. This is not limited herein in this application.

307: The watch 200 confirms that the watch 200 is bound to the mobile phone 100.

For example, when obtaining the binding request initiated by the mobile phone 100, the watch 200 may display a corresponding confirmation interface, and the user may perform a confirmation operation on the confirmation interface, to complete a process of binding the watch 200 to the mobile phone 100. The binding process is, for example, a process in which the watch 200 is bound to the smart care application running on the mobile phone 100.

It may be understood that, in some other embodiments, an execution process of the foregoing steps 301 to 307 may also be described as a process of establishing a communication connection between the mobile phone 100, the account cloud 300a, the child cloud 300b, and the watch 200. In a process of logging in to the mobile phone account, the mobile phone 100 may establish a communication connection to the account cloud 300a. In a process in which the mobile phone 100 runs the smart care application to be bound to the watch 200 and log in to the watch account, the watch 200 may establish a communication connection to the account cloud 300a, and the mobile phone 100 and the watch 200 may establish a communication connection to the child cloud 300b.

308: The watch 200 synchronizes a binding success notification message to the child cloud 300b.

For example, after confirming that the watch 200 is bound to the smart care application running on the mobile phone 100, the watch 200 may synchronously notify the child cloud 300b that binding to the smart care application has been completed. For example, the watch 200 may synchronize the binding success notification message to the child cloud 300b.

309: The mobile phone 100 polls the child cloud 300b and obtains the binding success message.

For example, after performing the foregoing step 302 to display the corresponding binding operation interface, the mobile phone 100 may start to poll a child cloud server, to confirm with the child cloud 300b whether the watch 200 confirms to be bound to the smart care application. The polling process may also be understood as a process in which the mobile phone 100 confirms whether the running smart care application is successfully bound to the watch 200.

It may be understood that, after obtaining the binding success message, the mobile phone 100 may display a corresponding prompt interface.

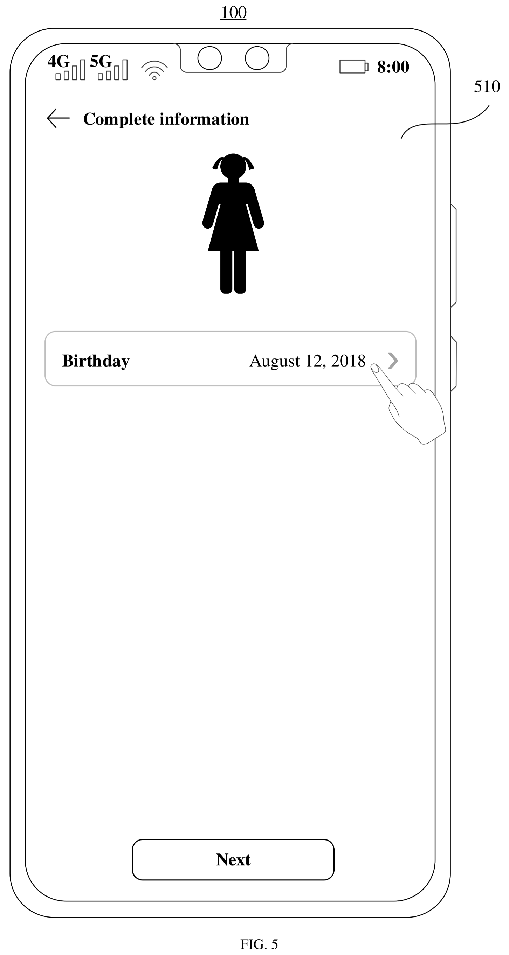

When performing the foregoing step 303, after creating/logging in to the watch account for the watch 200 and completing binding, the mobile phone 100 may display a corresponding binding success interface to notify the user. After binding succeeds, the user may further perform an operation on the mobile phone 100 to complete information about the watch user, for example, select an option "complete information about the watch user" on the binding success interface displayed by the mobile phone 100. Correspondingly, the mobile phone 100 may display an information complete interface 510 shown in FIG. 5. The user may set a birthday of the watch user on the interface 510, where age information that is not entered or is incorrectly entered when a new account is created may be corrected in the setting process. In some embodiments, the user may further perform an operation on the information complete interface 510, to set information such as a profile picture, a nickname, a mobile phone number, a gender, a weight, and a height of the watch user. This is not limited herein.

Correspondingly, after the watch 200 is bound to the smart care APP running on the mobile phone 100, the watch 200 may also display a corresponding binding success interface.

310: The watch 200 queries the account cloud 300a for a current age group of the watch user.

For example, each time the watch 200 is charged, the watch 200 may query the account cloud 300a for the current age group of the watch user. In some other embodiments, the watch 200 may alternatively periodically poll the account cloud 300a for the age group of the watch user.

311: The watch 200 matches a data management solution for the watch user, and correspondingly sets a watch end permission.

For example, still with reference to FIG. 2, when finding that the watch user is at the childhood stage (< the age of 14), the watch 200 may match the data management solution A shown in FIG. 2 for the watch user. In the solution A, a mobile phone end permission may be preset to include a switch control permission for privacy data on the watch 200 and for acquiring and reporting, by the authorized watch, a behavior log and an error log in a process in which the user uses the watch, and a control permission for aspects such as some data synchronization switches. In addition, in the solution A, the watch end permission may be preset to not include a control permission for the foregoing aspects.

When finding that the watch user is at the adolescent stage (the age of 14 to 18), the watch 200 may match the data management solution B for the watch user. In the solution B, the mobile phone end permission may be preset to include only a control permission for some data synchronization switches on the watch. In addition, in the solution B, the watch end permission may be preset to include a switch control permission for privacy data on the watch and for acquiring and reporting, by the authorized watch, a behavior log and an error log in a process in which the user uses the watch.

When finding that the age of the watch user is at the adult stage (≥ the age of 18), the watch 200 may match the data management solution C for the watch user. In the solution C, the watch end permission may be preset to include a switch control permission for the privacy data on the watch and for acquiring and reporting, by the authorized watch, a behavior log and an error log in a process in which the user uses the watch, and a control permission for some data synchronization switches. In addition, in the solution C, the mobile phone end permission may be preset to not include a control permission for the foregoing aspects.

After the watch 200 sets the watch end permission of the watch 200 based on the matched data management solution, the user may perform an operation on the watch 200 to open a related interface of a "privacy center".

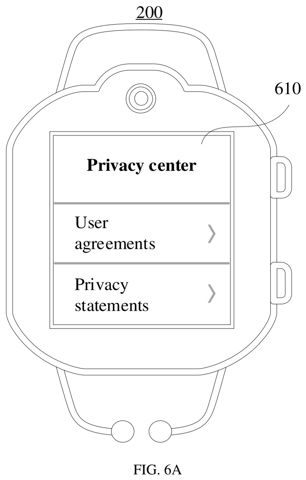

For example, FIG. 6A to FIG. 6C separately show diagrams of related interfaces after the watch 200 correspondingly sets the watch end permission based on different matched data management solutions according to this embodiment of this application.

As shown in FIG. 6A, for the foregoing example, if the watch 200 matches the data management solution A corresponding to the childhood stage for the watch user, the watch 200 may display a privacy center interface 610 shown in FIG. 6A in response to an operation of opening the related interface of the "privacy center" by the user. The interface 610 may display only content that does not relate to the switch control permission for the privacy data of the child user and for acquiring and reporting, by the authorized watch, a behavior log and an error log in a process in which the user uses the watch, and aspects such as data synchronization switches. The displayed content is, for example, content such as "user agreements" and "privacy statements".

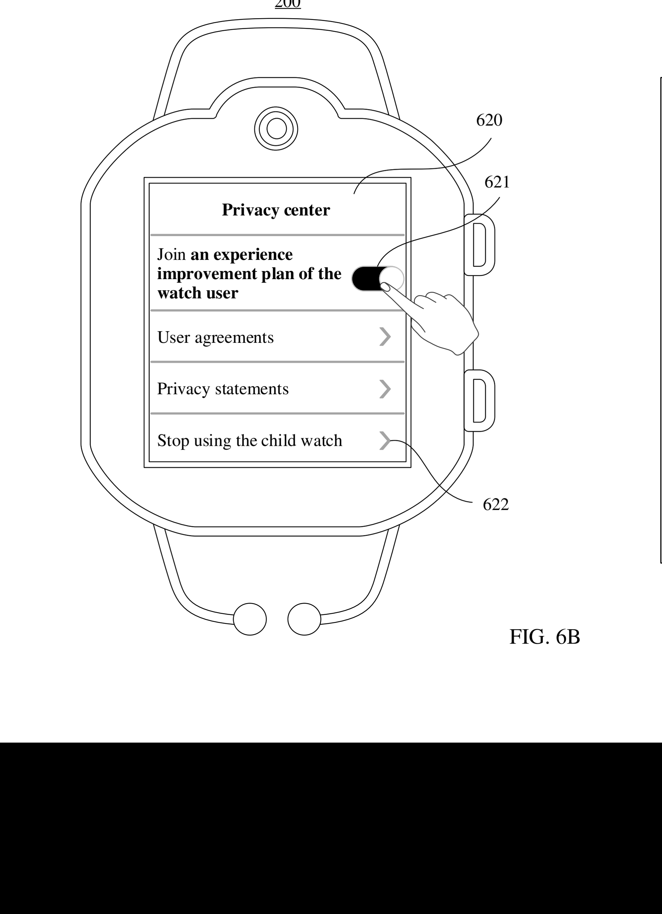

If the watch 200 matches the data management solution B corresponding to the adolescent stage for the watch user, the watch 200 may display a privacy center interface 620 shown in FIG. 6B in response to an operation of opening the related interface of the "privacy center" by the user. Compared with the interface 610 shown in FIG. 6A, the privacy center interface 620 shown in FIG. 6B may display an authorization switch 741, where the switch 741 may display, for example, "join an experience improvement plan of the watch user". In some embodiments, the interface 620 may further display a "stop using the child watch" option 622, so that the watch user at the adolescent stage performs an operation on the watch 200 to unbind the watch 200 from the mobile phone 100. In some other embodiments, the interface 620 may further display a "child watch notification" option 623, so that the watch user at the adolescent stage views, on the watch 200, notification content related to use of the watch, and the like. Details are not described herein.

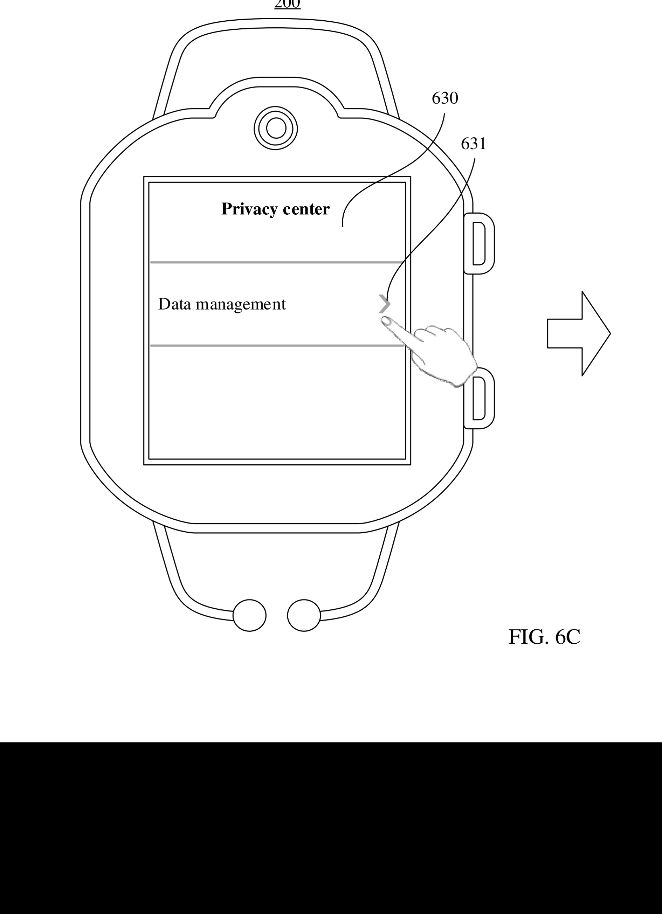

If the watch 200 matches the data management solution B corresponding to the adolescent stage for the watch user, the watch 200 may display a privacy center interface 630 shown in FIG. 6C in response to an operation of opening the related interface of the "privacy center" by the user. Compared with the interface 620 shown in FIG. 6B, the privacy center interface 630 shown in FIG. 6C may further display a "data management" option 631. After the user taps the option 631, the watch 200 may correspondingly display a data management interface 640.

As shown in FIG. 6C, the data management interface 640 may display a plurality of data synchronization switches, for example, a watch position switch 641, a sports record switch 642, a contact list switch 643, an album switch 644, an unknown SMS message switch 645, and an automatic answering allowing switch 646.

It may be understood that, in some other embodiments, after setting the watch end permission of the watch 200 based on the matched data management solution, the watch 200 may alternatively display a privacy center interface of another different style in response to a user operation. This is not limited herein.

312: The watch 200 synchronizes the matched data management solution to the child cloud 300b.

For example, when setting the watch end permission of the watch 200 based on the matched data management solution, the watch 200 may synchronously send the matched data management solution to the child cloud 300b.

313: The mobile phone 100 requests a latest data management solution from the child cloud 300b.

For example, after receiving the data management solution synchronized by the watch 200, the child cloud 300b stores the solution. When responding to an operation of opening, by the user, the smart care application, the mobile phone 100 may first request the latest data management solution from the child cloud 300b.

314: The mobile phone 100 sets the mobile phone end permission based on the obtained data management solution.

For example, the watch 200 may correspondingly synchronize, to the child cloud 300b, the data management solution matched for the watch user. In response to displaying, by the user, a related management interface for the bound watch 200, for example, a device management interface of the smart care application, the mobile phone 100 may request the latest data management solution from the child cloud 300b. Further, the mobile phone 100 may refresh display content on the corresponding device management interface based on the obtained latest data management solution.

In some embodiments, after the watch 200 is successfully bound to the smart care application running on the mobile phone 100, the user may operate a corresponding function control on a related interface that is of the smart care application and that is displayed on the mobile phone 100, to manage data and/or an application on the watch 200. For example, the user may perform an operation on the related interface of the smart care application to enable a "watch setting" function, and tap a related option of "privacy center", so that the mobile phone displays privacy center interfaces corresponding to the foregoing obtained different data management solutions.

With reference to FIG. 7A-1 and FIG. 7A-2, if the mobile phone 100 obtains the data management solution A, the mobile phone end permission includes a switch control permission for privacy data on the watch 200 and for acquiring and reporting, by the authorized watch, a behavior log and an error log in a process in which the user uses the watch, and a control permission for some data synchronization switches. After the mobile phone end permission is correspondingly set, with reference to FIG. 7A-1 and FIG. 7A-2, the user may perform an operation on a privacy center interface 710, to enable or disable a switch control 711 corresponding to "join an experience improvement plan of the watch user", to authorize the watch to acquire and report the behavior log, the error log, and the like in the process in which the user uses the watch. The user may further tap a "data management" option 712 on the interface 710, so that the mobile phone 100 displays a corresponding data management interface 720. All switches displayed on the interface 720, for example, data synchronization switches such as a watch position 721, a sports record 722, a contact list 723, an album 724, an unknown SMS message 725, and automatic answering allowing 726, may allow to be enabled or disabled by the user through control.

With reference to FIG. 7B, if the mobile phone 100 obtains the data management solution B, the mobile phone end permission includes a switch control permission for privacy data on the watch 200 and for acquiring and reporting, by the authorized watch, a behavior log and an error log in a process in which the user uses the watch, and a control permission for some data synchronization switches. In this case, after the mobile phone end permission is correspondingly set, the user may tap a "data management" option 731 on a privacy center interface 730 shown in FIG. 7B, so that the mobile phone 100 displays a corresponding data management interface. For the data management interface, refer to the data management interface 720 shown in FIG. 7A-1 and FIG. 7A-2. In this case, all switches on the interface, for example, data synchronization switches such as a watch position, a sports record, a contact list, an album, an unknown SMS message, and automatic answering allowing may still allow to be enabled or disabled by the mobile phone user through control. However, in the data management solution B, the switch control permission that is for acquiring and reporting, by the authorized watch, a behavior log and an error log in a process in which the user uses the watch and that is in the mobile phone end permission is correspondingly disabled. In this case, a switch control 732 corresponding to "join an experience improvement plan of the watch user" on the privacy center interface 730 displayed on the mobile phone 100 may be displayed in a grayed-out state, indicating that the user is not allowed to perform an operation.

If the mobile phone 100 obtains the data management solution C, the mobile phone end may correspondingly disable the switch control permission for privacy data on the watch 200 and for acquiring and reporting, by the watch, a behavior log and an error log in a process in which the user uses the watch, and the control permission for some data synchronization switches. To be specific, the mobile phone end permission has no control permission. After the mobile phone end permission is correspondingly set, the switch control permission that is for acquiring and reporting, by the watch, a behavior log and an error log in a process in which the user uses the watch and that is in the mobile phone end permission is correspondingly disabled in the data management solution C. In this case, a switch control corresponding to "join an experience improvement plan of the watch user" on the privacy center interface displayed on the mobile phone 100 may be displayed in the grayed-out state shown in FIG. 7B, and the user is not allowed to perform an operation. In addition, the "data management" option 731 shown in FIG. 7B may also be displayed in a grayed-out state. If the user taps the grayed-out "data management" option, for a data management interface correspondingly displayed by the mobile phone 100, refer to FIG. 7C. All switches displayed on the data management interface 740, for example, data synchronization switches such as a watch position 741, a sports record 742, a contact list 743, an album 744, an unknown SMS message 745, and automatic answering allowing 746, may be displayed in a grayed-out state, indicating that an operation is not allowed.

It may be understood that, based on the interaction process of the foregoing steps 301 to 314, when the watch 200 is used for the first time, based on the age information of the watch user recorded by a watch account that is newly created/logged in, a data management solution corresponding to a corresponding age group may be matched for the watch user, to separately manage the mobile phone end permission and the watch end permission. In this way, a wearable device such as the watch 200 can meet data management requirements of users of different age groups, and can adapt to data management capabilities of users of different age groups, to ensure security of data or an application on the wearable device such as the watch.

It may be understood that, in a process in which the watch 200 is continuously used by the user, as the age of the user increases, when the watch user grows to a next age group, in the data management method provided in this application, a data management solution may also be adaptively updated for the watch user. The following describes, in detail with reference to the corresponding accompanying drawings, a specific implementation process of updating a data management solution adapted to user growth.

FIG. 8A, FIG. 8B, and FIG. 8C are a diagram of another interaction procedure according to an embodiment of this application. The interaction procedure mainly describes a specific implementation process of updating a data management solution adapted to user growth in a process in which the watch 200 is continuously used by a user.

As shown in FIG. 8A, FIG. 8B, and FIG. 8C, the interaction procedure mainly relates to interaction between the mobile phone 100, the watch 200, the account cloud 300a, and the child cloud 300b. In some embodiments, specifically, after implementing the interaction procedure shown in FIG. 3A and FIG. 3B, the mobile phone 100, the watch 200, the account cloud 300a, and the child cloud 300b may continue to implement the interaction procedure shown in FIG. 8A, FIG. 8B, and FIG. 8C, monitor an age change of the user, and adjust a data management solution for the watch user that is about to grow to a next age group.

Specifically, the interaction procedure shown in FIG. 8A, FIG. 8B, and FIG. 8C may include the following steps.

801: The watch 200 queries the account cloud 300a for a current age group of the watch user.

For example, the watch 200 may also query the account cloud 300a for a current age group of the watch user each time the watch 200 is charged, or query the current age group of the watch user in a manner of periodically polling the account cloud 300a. For details, refer to related descriptions in step 310. Details are not described herein.

802: The watch 200 detects that an age group of the watch user changes to the next age group.

For example, the watch 200 may compare a found age group of the watch user with a previously found age group. If they are different, it indicates that the watch 200 detects that the age group of the watch user has changed to the next age group.

For the foregoing example, in a growth process of the watch user, an age group change from a childhood stage to an adolescent stage and an age change from the adolescent stage to an adult stage may be experienced. For example, when the watch user grows from the childhood stage to the age of 14, the account cloud 300a may change the age group of the watch user to the next age group, that is, the adolescent stage. For another example, when the watch user grows from the adolescent stage to the age of 18, the account cloud 300a may change the age group of the watch user to the next age group, that is, the adult stage.

Correspondingly, when the watch 200 queries the account cloud 300a for the age group of the watch user, the watch 200 may find updated related information that indicates that the watch user has entered the next age group and that is on the account cloud 300a.

803: The watch 200 displays a notification that a data management solution is to be changed, for the watch user to confirm.

For example, the watch 200 may generate a corresponding data management solution change notification based on a detected age group change situation, that is, the age group of the watch user changes to the next age group, and display the data management solution change notification, so that the user confirms whether to correspondingly change the data management solution. A manner of notifying the user of the data management solution change notification may be notifying content such as a change of account information, a change of privacy statements, or a change of user agreements. It may be understood that, an occasion on which the watch 200 displays the change notification may be the first day when the watch user grows to the next age group, or may be the first time when the watch user finds, from the account cloud 300a, that the age group of the watch user has changed to the next age group. This is not limited herein.

For example, with reference to FIG. 9A, FIG. 9B, and FIG. 9C, if detecting that the watch user has entered the adolescent stage or the adult stage, the watch 200 may display a privacy center notification 910. The notification 910 may be displayed in a popup message or a notification bar of the watch 200. This is not limited herein. Content of the privacy center notification 910 may be content such as "Your account information has changed. Please tap to view details."

If the watch 200 detects that the watch user has entered the adolescent stage, if the user taps the content of the privacy center notification 910, the watch 200 may further display a watch notification interface 920. If the user taps an "agree" control 921 on the watch notification interface 920, a data management solution change may be triggered to be started on the watch 200. If the user taps a "cancel" control 922 on the watch notification interface 920, the data solution change is not triggered to be started. In this case, the watch 200 may display a corresponding notification interface to remind the user to unbind the watch 200 from the smart care application. Details are not described herein.

If the watch 200 detects that the watch user has entered the adult stage, if the user taps the content of the privacy center notification 910, the watch 200 may display a data authorization interface 930. Content displayed on the interface 930 may be, for example, content such as "Your account information has changed. Do you agree to retain data switch states set by the parent?", and "You can subsequently change the switch states through "settings" > "about watch" > "privacy center" > "data management"". After reading the foregoing notification content, the user may tap an "agree" control 931 to accept the switch states set by the user on a corresponding interface of the smart care application of the mobile phone 100. Alternatively, the user may tap a "cancel" control 932 on the data authorization interface 930 to reset states of the data synchronization switches on the watch 200. When detecting that the user taps the "cancel" control 932, the watch 200 may display a data management interface 940 shown in FIG. 9A, FIG. 9B, and FIG. 9C. On the interface 940, the user may check a switch state corresponding to each data synchronization switch, for example, check switches corresponding to the "sports record" and the "unknown SMS message", indicating that the switches are set to an enabled state. After completing the settings, the user may tap a "complete" control 941 to close the data management interface 940.

In some other embodiments, the user may alternatively tap a "clear all" control 911 on the privacy center notification 910 shown in FIG. 9A, FIG. 9B, and FIG. 9C, to ignore the privacy center notification. It may be understood that after the user ignores the privacy center notification, the watch 200 may display the content of the privacy center notification 910 again when the watch 200 is charged next time or powered on for use, to remind the user to confirm. In some other embodiments, after the user ignores the privacy center notification, the watch 200 may alternatively directly display the watch notification interface 920 or the data authorization interface 930 shown in FIG. 9A, FIG. 9B, and FIG. 9C when the watch 200 is charged next time or powered on for use, to guide the user to trigger the data management solution change, caused by the age group change, to be started.

In some embodiments, when generating the corresponding data management solution change notification, the watch 200 may notify, by using the child cloud 300b, the smart care application running on the mobile phone 100. When receiving the corresponding notification, the mobile phone 100 may also display a corresponding notification interface. For example, the notification interface may display "Respectful XXX Parent, hello! Your child XXX is about to be one year older, and can use more functions and services by using the watch account, including processing such as agreeing or withdrawing related data changes", or display content such as "Respectful XXX parent, hello! Your child XXX is about to become an adult, and can manage the watch account and related data, including a watch position, sports and health, a contact list, an album, and an unknown SMS message", to notify the mobile phone user of a change process caused by growth of the watch user to the corresponding age group. This is not limited herein.

804: The watch 200 detects an operation of confirming a change by the user.

For example, with reference to FIG. 9A, FIG. 9B, and FIG. 9C, for example, when the watch 200 detects that the user taps the "agree" control on the watch notification interface 920 or the data authorization interface 930, it indicates that the user confirms the change, that is, the operation of confirming the change by the user may be detected. In this case, the watch 200 may continue to perform the following step 805, to match a to-be-changed data management solution for the watch user.

805: The watch 200 matches a data management solution corresponding to the next age group for the watch user.

For example, the watch 200 may correspondingly match the data management solution based on the currently changed age group of the watch user, that is, the next age group. For example, if the next age group is the adolescent stage, the data management solution B may be matched for the watch user; if the next age group is the adult stage, the data management solution C may be matched for the watch user; or the like.

For a specific matching process, refer to related descriptions in step 311. Details are not described herein.

806: The watch 200 sets a watch end permission based on the data management solution corresponding to the next age group.

For details of setting the watch end permission based on the matched data management solution and the related interface that is correspondingly displayed by the watch 200, refer to related descriptions in step 311. Details are not described herein.

807: The watch 200 synchronizes the data management solution corresponding to the next age group to the child cloud 300b.

808: The mobile phone 100 requests the latest data management solution from the child cloud 300b.

809: The mobile phone 100 sets the mobile phone end permission based on the obtained data management solution.

For specific implementation processes of step 807 to step 809, refer to related descriptions in step 312 to step 314. For a related interface displayed after the mobile phone 100 sets the mobile phone end permission, refer to related descriptions in step 314. Details are not described herein.

810: The mobile phone 100 receives an operation of indicating, by the user, to display a related interface for managing the watch.

For example, the mobile phone 100 may run the smart care application in response to an operation of opening the smart care application by the user, and display the related management interface that is provided by the smart care application and that is used to manage the watch 200. In this case, when the mobile phone 100 displays and runs the smart care application, an execution process of the following steps 811 to 818 may be triggered.

811: The mobile phone 100 requests to obtain age information of the watch user from the child cloud 300b.

For example, the mobile phone 100 may request the child cloud 300b for the age information of the watch user. It may be understood that, to facilitate management of related information of the watch account, the watch account information stored on the account cloud 300b may be accessed, queried, and obtained only by the watch 200 or the child cloud 300b authorized by the watch 200. When needing to obtain the age information of the watch user, the mobile phone 100 may request, by using the child cloud 300b, the account cloud 300a for the age information.

812: The child cloud 300b obtains the age information of the watch user based on an authorization token provided by the watch.

For example, the child cloud 300b may access the account cloud 300a to obtain the age information of the watch user based on the authorization token obtained in a process of interacting with the watch 200, for example, a resource token (resource token, RT).

In some other embodiments, after a binding relationship is established between the watch 200 and the smart care application on the mobile phone 100, the watch 200 may also provide the authorization token for the mobile phone 100, or the account cloud 300a may also provide an interface for the mobile phone 100 to access the watch account information, so that the mobile phone 100 can obtain the age information of the watch user at any time, and the like. This is not limited in this application.

813: The child cloud 300b sends the obtained age information to the mobile phone 100.

For example, after obtaining the age information of the watch user, the child cloud 300b may return the age information to the mobile phone 100.

814: The mobile phone 100 updates the age information of the watch user, and determines whether a notification condition is met.

If a determining result is yes, the following step 815 may continue to be performed, to notify the user to confirm whether the age is correct.

If the determining result is no, the foregoing step 810 may be returned to.

For example, the mobile phone 100 may update locally recorded age information based on the received age information of the watch user, and determine whether the current age of the watch user meets the preset notification condition. The notification condition may be, for example, being within a preset quantity of days before the age group of the watch user changes to the next age group. For example, within 30 days before the age of the watch user reaches the age of 14, that is, within 30 days before the age group of the watch user changes to the adolescent stage, the mobile phone 100 may perform the following step 815 to perform notification. The preset quantity of days may be 30, or may be a proper preset value such as 28 or 15. This is not limited herein.

815: The mobile phone 100 notifies the user to confirm whether the age is correct.

For example, after determining that the received age information of the watch user meets the notification condition, the mobile phone 100 may display a corresponding notification interface, for example, display an interface that reminds the user to check the age information or another interface that notifies the user to confirm whether the age is correct. Details are not described herein.

816: The mobile phone 100 detects an operation of modifying the age of the watch user.

817: The mobile phone 100 synchronizes modified age information to the account cloud 300a.

818: The account cloud 300a updates a current age group of the watch user.

For example, after receiving the modified age information that is of the watch user and that is entered by the user by using the smart care application on the mobile phone 100, the account cloud 300a may update age information stored in cloud space. For example, the account cloud 300a replaces a previously stored birthday with a birthday that is of the watch user and that is modified by the user. Further, the account cloud 300a may determine, based on the modified age information, the current age group of the user, and update an age group tag marked for the watch user.

It may be understood that, in this embodiment of this application, privacy data management mainly includes changes to the user agreements and the privacy statements, and the like. The user may perform an operation on the watch 200 or the mobile phone 100 to enter the privacy center, and view the user agreements and the privacy statements. Details are not described herein. When the user agreements or the privacy statements change, the user may be notified by using a related interface of the watch 200 or the mobile phone 100. For different specific data management solutions, corresponding notification manners and notification content on the watch 200 or the mobile phone 100 may be different. In this embodiment of this application, different privacy center entrances may be set on the watch side and the mobile phone side, to separate the user agreements and the privacy statements of the watch 200 from the smart care application on the mobile phone 100. When the watch 200 is bound, watch user agreements and privacy statements may be authorized for the watch 300. Details are described as follows.

Watch side: When the smart care application on the mobile phone 100 is bound to the watch, the smart care application may authorize the watch user agreements and the privacy statements, and support a change notification. A privacy center entry may be added to the watch 200, to view and manage the watch user agreements and the privacy statements. In addition, the watch 200 may support a data acquisition control that is independently controlled, including data synchronization switches such as a watch position, sports data, a contact list, an album, and an unknown SMS message. In different data authorization solutions, switch states of the foregoing data synchronization switches may not be allowed to be set or may be allowed to be set on the watch end. For details, refer to related descriptions in step 311.

Mobile phone side: A privacy center entry may be added to a corresponding interface of the smart care application, to view and manage the watch user agreements and the privacy statements. In addition, the smart care application of the mobile phone 100 may also support a data acquisition switch that is independently controlled, including data synchronization switches such as a watch position, sports data, a contact list, an album, and an unknown SMS message. In different data authorization solutions, switch states of the foregoing data synchronization switches may not be allowed to be set or may be allowed to be set on the mobile phone end. For details, refer to related descriptions in step 314. Details are not described herein.

It may be understood that, when the user agreements or the privacy statements change, the child cloud 300b may notify the watch 200 and the mobile phone 100 based on a communication connection between the child cloud 300b and the watch 200 and the mobile phone 100. After the user confirms the foregoing change by using the mobile phone 100 or the watch 200, flag bit information of data related to the user agreements or the privacy statements correspondingly stored on the child cloud 300b may be correspondingly changed. In this way, when the age information of the watch user changes or the watch user grows to the next age group, the child cloud 300b may update, to the mobile phone 100 or the watch 200 based on the change of the flag bit information, changed user agreements or changed privacy statements obtained after the user agrees to change.

For different data authorization solutions, for example, when the age of the watch user is lower than the age of 14, with reference to FIG. 2, the child cloud 300b may notify the mobile phone 100 of the change, and the mobile phone 100 displays a corresponding interface to notify the user. For the notification interface, refer to FIG. 10A-1 and FIG. 10A-2.

As shown in FIG. 10A-1 and FIG. 10A-2, after receiving a privacy change notification message notified by the child cloud 300b, the mobile phone 100 may display a change notification 1011 on a guard interface 1010 of the running smart care application. In this case, the user may tap content such as "change details", "watch user agreements", and "statements about watch services and privacy" in the change notification 1011, to view detailed content. After reviewing related content after the change, the user may tap an "agree" control 1012 on the change notification 1011, to agree to the change of the related content. In some embodiments, the user may alternatively tap a "cancel" control 1013 on the change notification 1011, to reject the change. In this case, the mobile phone 100 may display a prompt box 1021 on a guard interface 1020.

Still with reference to FIG. 10A-1 and FIG. 10A-2, the prompt box 1021 may display, for example, content such as "If you do not agree to update the change, you cannot view and manage watch information of XXXX. Upon confirmation, unbind the watch first, to avoid affecting normal use of the watch", so as to guide the user to tap the "agree" control 1012 in the change notification 1011. In some embodiments, the user may tap a "view changes" control 1022 on the guard interface 1020, to view related change content such as the foregoing "change details", "watch user agreements", "statements about watch services and privacy", and the like. Details are not described herein. Alternatively, the user may tap an "unbind the watch" control 1023. In this case, the mobile phone 100 may have a related interface of the unbinding control, so that the user performs an operation to unbind the smart care application running on the mobile phone 100 from the watch 200.

When the age of the watch user reaches or exceeds the age of 14, with reference to FIG. 2, the child cloud 300b may notify the watch 200 of the change, and the watch 200 displays a corresponding interface to notify the user. For the notification interface, refer to FIG. 10B.

As shown in FIG. 10B, after receiving the privacy change notification message notified by the child cloud 300b, the watch 200 may display a privacy center notification 1040. Content of the notification 1040 may be "To provide a better service, we have updated the privacy statements and the user agreements", or the like. The user may tap the content of the notification 1040, to view the detailed notification. In this case, in response to the user operation, the watch 200 may display content related to "change details", "watch user agreements", and "statements about watch services and privacy". After reviewing related content after the change, the user may perform an operation to agree to or reject the change of the related content. If the user rejects the change of the related content, the watch 200 may further display a related notification that reminds the user to unbind the watch, and the like. Details are not described herein.

FIG. 11 is a diagram of an architecture of a data management system for implementing the foregoing data management method according to an embodiment of this application.

As shown in FIG. 11, a data management system 1100 may include the account cloud 300a, the watch 200, the child cloud 300b, and the mobile phone 100. The smart care application 101 may run on the mobile phone 100.

Specifically, the mobile phone user may perform an operation to open the smart care application 101, and perform an operation to bind the watch 200. In a binding process, the smart care application 101 may create/log in to a watch account for the watch 200, and corresponding watch account information, a login status, and the like may be synchronized to the account cloud 300a. The account cloud 300a may determine, based on the age information in the watch account information, the age group of the watch user, and may add the age group tag to the watch user or the corresponding watch account information.

The watch 200 accesses the account cloud 300a by using Wi-Fi or a cellular data network supported by a SIM card of the watch, so as to obtain, in real time, an age group that is of the watch user and that is correspondingly recorded in the watch account, and match a data management solution corresponding to the age group of the watch user for the watch user.

A system of the watch 200 may be installed with a kit 201, a setting application 202, a data synchronization switch 203, and the like. The watch 200 may transmit the authorization token to the child cloud 300b by using the account kit 201, so that the child cloud 300b queries the account cloud 300a for the age information that is of the watch user and that is recorded in the watch account, and the like. The watch 200 may query, by using a privacy center in the setting application 202, the account cloud 300a for the age group of the watch user, synchronize a state of the data synchronization switch with the child cloud 300b, and push a growth notification to the child cloud 300b. The watch 200 may synchronize the state of the data synchronization switch with the child cloud 300b when the watch 200 is bound to the smart care application 101 or when a change notification is received. The change notification may be a notification corresponding to a change of the switch state of the data synchronization switch, or the like. The growth notification may be a notification or the like that is pushed to the smart care application on the mobile phone 100 by using the child cloud 300b as an example in step 803. This is not limited herein.

The setting application 202 of the watch 200 may further display a corresponding interface in response to a related operation of viewing the privacy statements or the user agreements by the watch user. For details, refer to related descriptions in FIG. 6A to FIG. 6C. Details are not described herein.

Correspondingly, the watch 200 may further include a data/switch state database used to synchronize personal privacy data that is of the watch user and that is acquired on the watch 200. The privacy center of the watch 200 may synchronize, to the database, acquired personal privacy data of the watch user, the state that is of the data synchronization switch and that is set by the user on the watch 200, and the like. In the database, a value corresponding to a data switch state on the watch 200 can be transmitted by default. Alternatively, the user may close a data/switch state transmission channel of the database by setting the watch 200. This is not limited herein. The watch 200 may determine, based on the switch state recorded in the database, whether to upload the privacy data on the watch to the child cloud 300b, and the like.

The child cloud 300b may obtain the age information of the watch user from the account cloud 300a based on the token, for the smart care application 101 to query. The child cloud 300b may determine, based on the switch state of the data synchronization switch, whether to synchronize the privacy data on the watch to the smart care application 101, and the like.

The mobile phone 100 may run the smart care application 101 in response to a user operation. The smart care application 101 may establish a communication connection to the child cloud 300b by using Wi-Fi or a cellular data network supported by a SIM card of the mobile phone. The smart care application 101 may further query the child cloud 300b for the age information of the watch user, obtain the growth notification pushed by the child cloud 300b, synchronize the switch state of the data synchronization switch to the child cloud 300b, and the like.

It may be understood that, for a specific process of interaction between the account cloud 300a, the watch 200, the child cloud 300b, and the mobile phone 100 in the data management system 1100 shown in FIG. 11, refer to related descriptions of steps in the interaction procedures shown in FIG. 3A and FIG. 3B and FIG. 8A, FIG. 8B, and FIG. 8C. Details are not described herein.

Based on the data management system shown in FIG. 11, FIG. 12 is a diagram of an implementation procedure of another data management method according to an embodiment of this application.

It may be understood that the steps of the procedure shown in FIG. 12 may be performed by the data management system 1100 shown in FIG. 11. The mobile phone 100 that is included in the system 1100 and that runs the smart care application 101 may be referred to as a management device, and the watch 200 may be referred to as a managed device.

Specifically, the procedure shown in FIG. 12 may include the following steps.

1201: The management device establishes a binding relationship with the managed device.

For a specific implementation process of establishing the binding relationship, refer to related descriptions in steps 301 to 309 shown in FIG. 3A and FIG. 3B. Details are not described herein.

1202: Determine an initial data management solution based on an age group of a user of the managed device.

For a specific implementation process of determining the initial data management solution, refer to related descriptions in steps 310 to 314 shown in FIG. 3A and FIG. 3B. Details are not described herein.

1203: Detect an age group change of the user of the managed device.

For example, the user of the managed device may be the foregoing watch user. For a specific implementation process of detecting the age group change of the user of the managed device, refer to related descriptions in step 801 shown in FIG. 8A, FIG. 8B, and FIG. 8C. Details are not described herein.

1204: Determine whether the age group of the user of the managed device changes.

If a determining result is yes, that is, the age group of the user of the managed device changes, the data management system 1100 may further perform an implementation process of the following steps 1205 to 1207.

If the determining result is no, that is, the age group of the user of the managed device does not change, the data management system 1100 may return to step 1203 to continue to detect whether the age group of the user of the managed device changes.

For example, the change of the age group of the user of the managed device may be a change from a childhood stage to an adolescent stage, or a change from the adolescent stage to an adult stage, or the like. A change process of two adjacent age groups is correspondingly described. For details of the foregoing determining process, refer to related descriptions of the detection process in step 802 shown in FIG. 8A, FIG. 8B, and FIG. 8C. Details are not described herein.

1205: Start to change the data authorization solution.

1206: Match a corresponding data authorization solution based on the age group of the user, and perform change.

For example, a data management solution A may be matched corresponding to an age group a of the user, a data management solution B may be matched corresponding to an age group b of the user, a data management solution C may be matched corresponding to an age group c of the user, ..., and a data management solution N may be matched corresponding to an age group n of the user.

It may be understood that determining the age group of the user based on the age information of the user and matching a corresponding data management solution corresponding to each age group may be flexibly set based on an actual requirement. This is not limited herein in this application.

1207: End changing the data authorization solution.

The foregoing steps 1205 to 1207 are specific implementation processes of matching a data management solution for the user of the managed device and performing change. For details, refer to related descriptions in steps 803 to 809 shown in FIG. 8A, FIG. 8B, and FIG. 8C, and details are not described herein.

FIG. 13 is a block diagram of a structure of an electronic device 1300 according to an embodiment of this application.

In this embodiment of this application, the electronic device 1300 may be the mobile phone 100 in the foregoing examples, or may be the watch 200 in the foregoing examples. In some other embodiments, the electronic device 1300 may be any electronic device configured to implement the data management method provided in this application.

The electronic device 1300 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identity module, SIM) card interface 195, and the like.

It may be understood that the structure illustrated in this embodiment of the present invention does not constitute a specific limitation on the electronic device 1300. In some other embodiments of this application, the electronic device 1300 may include more or fewer components than those shown in the figure, or combine some components, or split some components, or have different component arrangements. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, a neural-network processing unit (neural-network processing unit, NPU), and/or the like. Different processing units may be independent components, or may be integrated into one or more processors.

The controller may generate an operation control signal based on instruction operation code and a time sequence signal, to complete control of instruction fetching and instruction execution. In embodiments of this application, the processor 110 may control, by using the controller, instruction fetching and instruction execution, to implement the data management method provided in embodiments of this application. For example, the processor 110 may control, by using the controller, instruction fetching and instruction execution, to implement the steps that are correspondingly implemented by the mobile phone 100 or the watch 200 in the interaction procedure shown in FIG. 3A and FIG. 3B or FIG. 8A, FIG. 8B, and FIG. 8C.

A memory may be further disposed in the processor 110, and is configured to store instructions and data. In some embodiments, the memory in the processor 110 is a cache memory. The memory may store an instruction or data that has been used or cyclically used by the processor 110. If the processor 110 needs to use the instruction or data again, the processor 110 may directly invoke the instruction or data from the foregoing memory. This avoids repeated access, reduces waiting time of the processor 110, and therefore improves system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The USB interface 130 is an interface that conforms to a USB standard specification, and may be specifically a Mini USB interface, a Micro USB interface, a USB Type C interface, or the like. The USB interface 130 may be configured to connect to a charger to charge the electronic device 1300, or may be configured to transmit data between the electronic device 1300 and a peripheral device. The USB interface 130 may also be configured to connect to a headset, to play audio through the headset. The interface may be further configured to connect to another electronic device such as an AR device.

It may be understood that the interface connection relationship between the modules that is illustrated in embodiments of the present invention is merely an example for description, and does not constitute a limitation on the structure of the electronic device 1300. In some other embodiments of this application, the electronic device 1300 may alternatively use an interface connection manner different from that in the foregoing embodiment, or use a combination of a plurality of interface connection manners.

The charging management module 140 is configured to receive a charging input from a charger. The charger may be a wireless charger or a wired charger. In some embodiments of wired charging, the charging management module 140 may receive a charging input of a wired charger through the USB interface 130. In some embodiments of wireless charging, the charging management module 140 may receive a wireless charging input through a wireless charging coil of the electronic device 1300. When charging the battery 142, the charging management module 140 may further supply power to the electronic device by using the power management module 141.

The power management module 141 is configured to connect to the battery 142, the charging management module 140, and the processor 110. The power management module 141 receives an input from the battery 142 and/or the charging management module 140, and supplies power to the processor 110, the internal memory 121, the display 194, the camera 193, the wireless communication module 160, and the like. The power management module 141 may be further configured to monitor parameters such as a battery capacity, a battery cycle count, and a battery health status (electric leakage or impedance). In some other embodiments, the power management module 141 may alternatively be disposed in the processor 110. In some other embodiments, the power management module 141 and the charging management module 140 may alternatively be disposed in a same component.

A wireless communication function of the electronic device 1300 may be implemented through the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna in the electronic device 1300 may be configured to cover one or more communication bands. Different antennas may be further multiplexed, to improve antenna utilization. For example, the antenna 1 may be multiplexed as a diversity antenna of a wireless local area network. In some other embodiments, the antenna may be used in combination with a tuning switch.

The mobile communication module 150 may provide a solution applied to the electronic device 1300 for wireless communication including 2G/3G/4G/5G and the like. The wireless communication module 160 may provide a wireless communication solution that is applied to the electronic device 1300 and that includes wireless local area networks (wireless local area networks, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like.

In some embodiments, in the electronic device 1300, the antenna 1 is coupled to the mobile communication module 150, and the antenna 2 is coupled to the wireless communication module 160, so that the electronic device 1300 can communicate with a network and another device by using a wireless communication technology.

The electronic device 1300 implements a display function through the GPU, the display 194, the application processor, and the like. The GPU is a microprocessor for image processing, and is connected to the display 194 and the application processor. The GPU is configured to perform mathematical and geometric computing for graphics rendering. The processor 110 may include one or more GPUs that execute program instructions to generate or change display information.

The display 194 is configured to display an image, a video, and the like. The display 194 includes a display panel.

The electronic device 1300 may implement a shooting function through the ISP, the camera 193, the video codec, the GPU, the display 194, the application processor, and the like. The ISP is configured to process data fed back by the camera 193.

The camera 193 is configured to capture a still image or a video. An optical image of an object is generated through the lens, and is projected onto the photosensitive element. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format such as RGB or YUV.

The digital signal processor is configured to process a digital signal, and may process another digital signal in addition to the digital image signal. For example, when the electronic device 1300 performs frequency selection, the digital signal processor is configured to perform Fourier transform and the like on frequency energy.

The video codec is configured to compress or decompress a digital video. The electronic device 1300 may support one or more video codecs. In this way, the electronic device 1300 may play or record videos in a plurality of encoding formats, for example, moving picture experts group (moving picture experts group, MPEG) 1, MPEG 2, MPEG 3, and MPEG 4.

The external memory interface 120 may be configured to connect to an external storage card, for example, a Micro SD card, to extend a storage capability of the electronic device 1300. The external storage card communicates with the processor 110 through the external memory interface 120, to implement a data storage function.

The internal memory 121 may be configured to store computer-executable program code, where the executable program code includes instructions. The internal memory 121 may include a program storage area and a data storage area. The program storage area may store an operating system, an application required by at least one function, and the like. The data storage area may store data created during use of the electronic device 1300, and the like. In embodiments of this application, the application stored in the program storage area may be a smart care application used to manage the watch, and the data stored in the data storage area may be a latest data management solution received and acquired in a process of running the smart care application by the electronic device 1300. The electronic device 1300 may correspondingly set the mobile phone end permission based on the latest data management solution. This is not limited herein.

In addition, the internal memory 121 may include a high-speed random access memory, or may include a non-volatile memory, for example, at least one magnetic disk storage device, a flash memory device, or a universal flash storage (universal flash storage, UFS). The processor 110 executes various functional applications of the electronic device 1300 and data processing by running instructions stored in the internal memory 121 and/or instructions stored in the memory disposed in the processor. In embodiments of this application, for example, the processor 110 of the electronic device 1300 may run instructions that are stored in the internal memory 121 and that are used to perform the steps that are correspondingly implemented by the mobile phone 100 or the watch 200 in the interaction procedure shown in FIG. 3A and FIG. 3B or FIG. 8A, FIG. 8B, and FIG. 8C, to match corresponding data management solutions for the watch user in different age groups, to manage data or a switch state on the watch.

The electronic device 1300 may implement an audio function, for example, music playing and recording, through the audio module 170, the speaker 170A, the receiver 170B, the microphone 170C, the headset jack 170D, the application processor, and the like.

The sensor module 180 may include a pressure sensor, a gyroscope sensor, a barometric pressure sensor, a magnetic sensor, an acceleration sensor, a distance sensor, an optical proximity sensor, a fingerprint sensor, a temperature sensor, a touch sensor, an ambient light sensor, a bone conduction sensor, and the like. Details are not described herein.

The button 190 includes a power button, a volume button, and the like. The button 190 may be a mechanical button, or may be a touch button. The electronic device 1300 may receive a key input, and generate a key signal input related to user settings and function control of the electronic device 1300.

The motor 191 may generate a vibration prompt.

The indicator 192 may be an indicator light, and may indicate a charging status and a power level change, or may indicate a message, a missed call, a notification, and the like.

The SIM card interface 195 is configured to connect to a SIM card. The SIM card may be inserted into the SIM card interface 195 or removed from the SIM card interface 195, to implement contact with or separation from the electronic device 1300.

FIG. 14 is a block diagram of a structure of a software system of a mobile phone 100 according to an embodiment of this application.

The software system of the mobile phone 100 may use a layered architecture, an event-driven architecture, a microkernel architecture, a microservice architecture, or a cloud architecture. In an embodiment of the present invention, a software structure of the mobile phone 100 is described by using an Android system with a layered architecture as an example.

In the layered architecture, software is divided into several layers, and each layer has a clear role and task. The layers communicate with each other through a software interface. In some embodiments, an Android system is divided into four layers, which are respectively an application layer, an application framework layer, an Android runtime (Android Runtime) and system library, and a kernel layer from top to bottom.

As shown in FIG. 14, the application layer may include a series of application packages. The application packages may include applications such as Smart Care, Gallery, Calendar, Call, Map, Navigation, WLAN, Bluetooth, Music, Video, and Messages. The smart care application is bound to the watch 200, and interacts with the child cloud 300b and the account cloud 300a, to implement the data management method provided in embodiments of this application.

The application framework layer provides an application programming interface (application programming interface, API) and a programming framework for an application at the application layer. The application framework layer includes some predefined functions.

As shown in FIG. 14, the application framework layer may include a window manager, a content provider, a view system, a phone manager, a resource manager, a notification manager, and the like.

The window manager is configured to manage a window program. The window manager may obtain a size of the display, determine whether there is a status bar, perform screen locking, take a screenshot, and the like.

The content provider is configured to: store and obtain data, and enable the data to be accessed by an application. The data may include a video, an image, audio, calls made and answered, a browse history and a bookmark, a personal address book, and the like.

The view system includes a visual control, for example, a text display control or a picture display control. The view system may be configured to construct an application. A display interface may include one or more views. For example, a display interface including an SMS message notification icon may include a text display view and a picture display view.

The phone manager is configured to provide a communication function of the mobile phone 100, for example, call status management (including call connection and disconnection, and the like).

The resource manager provides various resources for an application, such as a localized string, an icon, a picture, a layout file, and a video file.

The notification manager enables an application to display, in the status bar, notification information, which may be used for conveying a notification-type message that may automatically disappear after a short stay without user interaction. For example, the notification manager is configured to: notify download completion, provide a message prompt, and the like. The notification manager may alternatively be a notification that appears in a top status bar of the system in a form of a chart or scroll bar text, for example, a notification of an application running on the background or a notification that appears on the screen in a form of a dialog window. For example, text information is prompted in the status bar, a prompt tone is issued, an electronic device vibrates, or an indicator light flashes.

The Android runtime includes a core library and a virtual machine. The Android runtime is responsible for scheduling and management of the Android system.

The core library includes two parts: a function that needs to be called in java language and a core library of Android.

The application layer and the application framework layer run in the virtual machine. The virtual machine executes java files at the application layer and the application framework layer as binary files. The virtual machine is configured to execute functions such as object life cycle management, stack management, thread management, security and exception management, and garbage collection.

The system library may include a plurality of functional modules, for example, a surface manager (surface manager), a media library (media library), a three-dimensional graphics processing library (for example, an openGL ES), a 2D graphics engine (for example, an SGL), and the like.

The surface manager is configured to: manage a display subsystem and provide fusion of 2D and 3D layers for a plurality of applications.

The media library supports playback and recording of a plurality of common audio and video formats, still image files, and the like. The media library may support a plurality of audio and video encoding formats, for example, MPEG 4, H.264, MP3, AAC, AMR, JPG, and PNG.

The three-dimensional graphics processing library is configured to implement three-dimensional graphics drawing, image rendering and synthesis, layer processing, and the like.

The 2D graphics engine is a drawing engine for 2D drawing.

The kernel layer is a layer between hardware and software. The kernel layer includes at least a display driver, a camera driver, an audio driver, and a sensor driver.

An embodiment of this application further provides a computer program product, configured to implement the data management method provided in the foregoing embodiments.

Embodiments of a mechanism disclosed in this application may be implemented in hardware, software, firmware, or a combination of these implementation methods. Embodiments of this application may be implemented as a computer program module or module code executed in a programmable system. The programmable system includes at least one processor, a storage system (including a volatile memory, a nonvolatile memory, and/or a storage element), at least one input device, and at least one output device.

The computer program module or the module code may be used for instruction inputting, to perform functions described in this application and generate output information. The output information may be used in one or more output devices in a known manner. For a purpose of this application, a processing system includes any system that has a processor such as a digital signal processor (digital signal processor, DSP), a microcontroller, an application-specific integrated circuit (application-specific integrated circuit, ASIC), or a microprocessor.

The module code may be implemented in a high-level modular language or an object-oriented programming language, to communicate with the processing system. The module code may alternatively be implemented in an assembly language or a machine language when necessary. Actually, the mechanism described in this application is not limited to the scope of any particular programming language. In any case, the language may be a compiled language or an interpreted language.

In some cases, the disclosed embodiments may be implemented in hardware, firmware, software, or any combination thereof. The disclosed embodiments may alternatively be implemented as instructions that are carried or stored on one or more transitory or non-transitory machine-readable (for example, computer-readable) storage media and that may be read and executed by one or more processors. For example, the instructions may be distributed by using a network or another computer-readable medium. Therefore, a machine-readable medium may include any mechanism for storing or transmitting information in a form readable by a machine (for example, a computer), including, but not limited to, a floppy disk, a compact disc, an optical disc, a read-only memory (CD-ROM), a magneto-optical disk, a read-only memory (read-only memory, ROM), a random access memory (random access memory, RAM), an erasable programmable read-only memory (erasable programmable read-only memory, EPROM), an electrically erasable programmable read-only memory (electrically erasable programmable read-only memory, EEPROM), a magnetic or optical card, a flash memory, or a tangible machine-readable memory configured to transmit information (for example, a carrier signal, an infrared signal, and a digital signal) through the Internet with transmitting signals in electrical, optical, acoustic or other forms. Therefore, the machine-readable medium includes any type of machine-readable medium that is suitable for storing or transmitting electronic instructions or information in a form readable by a machine (for example, a computer).

Reference to "one embodiment" or "an embodiment" in this specification means that specific features, structures, or characteristics described with reference to the embodiment are included in at least one example implementation solution or technology disclosed according to this embodiment of this application. The phrase "in one embodiment" appearing in various places in this specification does not necessarily all mean a same embodiment.

The disclosure of embodiments of this application further relates to an apparatus for performing operations in the text. The apparatus may be constructed dedicatedly for the required purpose or may include a general-purpose computer that is selectively activated or reconfigured by a computer program stored in the computer. Such a computer program may be stored in a computer-readable medium, for example, but not limited to any type of disk, including a floppy disk, a compact disc, a CD-ROM, a magneto-optical disk, a read-only memory (ROM), a random access memory (RAM), an EPROM, an EEPROM, a magnetic or optical card, an application-specific integrated circuit (ASIC), or any type of medium suitable for storing electronic instructions. In addition, each of them may be coupled to a computer system bus. In addition, the computer mentioned in this specification may include a single processor or may be an architecture using a plurality of processors for increased computing capabilities.

In addition, the language used in this specification is already mainly selected for readability and instructional purposes and may not be selected to depict or limit the disclosed topics. Therefore, embodiments of this application are intended to describe but not to limit the scope of the concepts discussed in this specification.

## Claims

1. A data management method, applied to a first electronic device, and comprising:
determining an age group of a first user; and
displaying a first control if the age group of the first user is a first age group, wherein the first control is configured to control a permission of a second electronic device to obtain first data, and the second electronic device is configured to manage the first electronic device; and
allowing or forbidding, in response to an operation of the first user on the first control, the second electronic device to obtain the first data; or
skipping displaying the first control if the age of the first user is a second age group.

2. The method according to claim 1, wherein the determining an age group of a first user comprises:
sending a first query request to a first cloud server, wherein the first query request is used to obtain an age group tag in information related to a first account used by the first user, and the age group tag is determined based on age information that is of the first user and that is recorded in the information related to the first account; and
determining the age group of the first user based on the obtained age group tag.

3. The method according to claim 2, wherein the first age group comprises a third age group and a fourth age group, an age interval corresponding to the third age group and the fourth age group is a continuous interval, an age of the third age group is higher than an age of the fourth age group, and the method comprises:
displaying a second control if the age group of the first user is the third age group, wherein the second control is configured to control a permission of the first electronic device to acquire and report second data; and
allowing or forbidding, in response to an operation of the first user on the second control, the first electronic device to acquire and report the second data; or
skipping displaying the second control if the age group of the first user is the fourth age group.

4. The method according to claim 3, wherein the second data comprises log data correspondingly generated in a process in which the first user uses the first electronic device, and the log data comprises any one of a behavior log of the first user and an error log of the first electronic device.

5. The method according to claim 3, wherein an age interval corresponding to the first age group and the second age group is a continuous interval, and an age of the first age group is higher than an age of the second age group; and
the age group tag comprises: a first tag corresponding to the first age group, a second tag corresponding to the third age group, and a third tag corresponding to the fourth age group.

6. The method according to claim 3, wherein the first control is a switch control, and
the allowing or forbidding, in response to an operation of the first user on the first control, the second electronic device to obtain the first data comprises:
allowing, in response to a first operation of setting a state of the first control to an enabled state by the first user, the second electronic device to obtain the first data; or
forbidding, in response to a second operation of setting the state of the first control to a disabled state by the first user, the second electronic device to obtain the first data.

7. The method according to claim 3, wherein the allowing or forbidding, in response to an operation of the first user on the second control, the first electronic device to acquire and report the second data comprises:
allowing, in response to a third operation of setting a state of the second control to an enabled state by the first user, the first electronic device to acquire and report the second data; or
forbidding, in response to a fourth operation of setting the state of the second control to a disabled state by the first user, the first electronic device to acquire and report the second data.

8. The method according to any one of claims 3 to 7, wherein the first control comprises any one of the following:
a corresponding control configured to synchronize position information of the first electronic device to a second cloud server;
a corresponding control configured to synchronize, to the second cloud server, sports information recorded by the first electronic device;
a corresponding control configured to synchronize, to the second cloud server, a contact list stored in the first electronic device;
a corresponding control configured to synchronize album data of the first electronic device to the second cloud server;
a corresponding control configured to synchronize, to the second cloud server, an unknown SMS message received by the first electronic device; and
a control configured to control whether the first electronic device is allowed for automatic answering of a call request.

9. The method according to claim 8, wherein the first data comprises any one of the following data acquired or stored by the first electronic device:
the position information, a sports record, the contact list, the album data, and the unknown SMS message.

10. The method according to claim 9, wherein the allowing or forbidding the first electronic device to acquire and report the second data comprises:
allowing or forbidding the first electronic device to report the acquired second data to the first cloud server or the second cloud server.

11. A data management method, applied to a second electronic device, wherein the second electronic device is configured to manage a first electronic device, and the method comprises:
skipping displaying, by the second electronic device, a first control when confirming that the first electronic device displays the first control, wherein the first control is configured to control a permission of the second electronic device to obtain first data; or
displaying, by the second electronic device, the first control when confirming that the first electronic device does not display the first control; and
obtaining, by the second electronic device, the first data of the first electronic device in response to an operation of setting a state of the first control to an enabled state by a second user.

12. The method according to claim 11, wherein the method further comprises:
skipping displaying, by the second electronic device, a second control when confirming that the first electronic device displays the second control, wherein the second control is configured to control a permission of the first electronic device to acquire and report second data; or
displaying, by the second electronic device, the second control when confirming that the first electronic device does not display the second control.

13. A data management system, comprising a first electronic device, a second electronic device, a first cloud server, and a second cloud server, wherein
the first electronic device and the second electronic device separately establish a first communication connection to the first cloud server;
the first electronic device and the second electronic device separately establish a second communication connection to the second cloud server; and
the first electronic device is configured to perform, based on the first communication connection and the second communication connection, the data management method according to any one of claims 1 to 10; and
the second electronic device is configured to perform, based on the first communication connection and the second communication connection, the data management method according to claim 11 or 12.

14. An electronic device, comprising one or more processors and one or more memories, wherein the one or more memories store one or more programs, and when the one or more programs are executed by the one or more processors, the electronic device is enabled to perform the data management method according to any one of claims 1 to 12.

15. A computer-readable medium, wherein the readable medium stores instructions, and when the instructions are executed on a computer, the computer is enabled to perform the data management method according to any one of claims 1 to 12.
